# EUROPEAN PATENT APPLICATION

(11) **EP 4 803 739 A1**
(43) Date of publication of application: **09.09.2026**
(21) Application number: 24884937.4
(22) Date of filing: 31.10.2024
(51) Int. Cl.: F03D 13/10

(54) **ASSEMBLING TOOL, AND CONSTRUCTION METHOD FOR WIND TURBINE GENERATOR SYSTEM**

(30) Priority: 31.10.2023 CN 202311438012; 31.10.2023 CN 202311436883
(71) Applicant: Jiangsu Goldwind Science & Technology Co., Ltd., Yancheng, Jiangsu 224100 (CN); Goldwind Pioneer Technology (Yancheng) Co., Ltd., Yancheng, Jiangsu 224001 (CN)
(72) Inventor: SHEN, Xingxing, Yancheng, Jiangsu 224100 (CN); YAN, Wenbin, Yancheng, Jiangsu 224100 (CN); ZHANG, Guiyang, Yancheng, Jiangsu 224100 (CN); LIU, Xinjian, Yancheng, Jiangsu 224100 (CN); CHEN, Chun, Yancheng, Jiangsu 224100 (CN)
(74) Representative: Hoffmann Eitle
(86) International application number: PCT/CN2024/129120
(87) International publication number: WO 2025/092939

(57) **Abstract**

An assembling tool (600), and a construction method for a wind turbine generator system. The assembling tool (600) is used for assembling a hub (1) and blades (2), and the assembling tool (600) comprises: a main support member (10), which has a predetermined height in a first direction (X), wherein one end of the main support member (10) in the first direction (X) is configured to support the hub (1), and the other end is configured to connect to a carrier; and an auxiliary docking member (20), which comprises an adjustment assembly (22) and a clamping assembly (21), wherein the clamping assembly (21) is provided with a clamping cavity (21a) running therethrough in a second direction (Y) so as to accommodate and fix the blades (2), and the adjustment assembly (22) is connected to the clamping assembly (21) and can adjust the relative position of the clamping assembly (21) to the main support member (10) in at least two directions, so as to align the blades (2) with the hub (1), the second direction (Y) intersecting the first direction (X).

## Description

### CROSS-REFERENCE TO RELATED APPLICATIONS

This application claims priority to Chinese patent application No. 202311436883.6, filed on October 31, 2023, and also claims priority to Chinese patent application No. 202311438012.8, filed on October 31, 2023, both of which are incorporated here by reference in their entireties.

### TECHNICAL FIELD

The present application relates to the field of wind power generation, and more particularly to an assembly tooling and a method for constructing a wind turbine generator system.

### BACKGROUND

Since the wind turbine generator systems have officially entered the era of grid parity, the state has canceled subsidies for grid-connected electricity prices, and domestic wind turbine manufacturers are seeking ways to achieve cost reduction for their generator sets. To achieve cost reduction for the generator sets, manufacturers are engaging in technological innovations to increase the capacity of an individual generator set; thus, domestic wind turbine generator systems are gradually developing towards large capacity.

Meanwhile, as the sea areas for nearshore projects are gradually developed to be saturated, wind power projects at sea are expanding to deep-sea areas, with project operating water depths extending to regions over 70 m and even over 100 m. For offshore wind turbine generator systems in deep-sea areas, their foundation type employs a floating foundation.

Currently, the construction method for floating generator sets mainly involves assembling a wind turbine onto a floating foundation via a crane at a wharf, then transporting it to the machine site by wet tow. Due to the very great weight and height of large-capacity generator sets in the era of grid parity, there are currently no larger and more suitable cranes available on the market capable of assembling large-capacity generator sets at wharves. Even if crane resources exist, the bearing capacity of wharves is limited, and there are very few domestic wharves capable of meeting such a large bearing capacity. Therefore, to reduce the construction cost of floating generator sets, the optimal approach is to install wind turbine generator systems at offshore machine sites.

It can thus be seen that, for future floating generator set projects in deep-sea areas, the development of an assembly tooling and a construction method for wind turbine generator systems for offshore installation by floating crane vessels in deep-sea areas is an urgent need in the floating wind power market after entering the era of grid parity.

### SUMMARY

Embodiments of the present application provide an assembly tooling and a method for constructing a wind turbine generator system, which can meet the installation requirements of wind turbine generator systems in the deep-sea area, and reduce installation difficulty and costs.

In a first aspect, some embodiments of the present application provide an assembly tooling configured to assemble a hub and a blade. The assembly tooling includes: a main support member having a predetermined height in a first direction, one end of the main support member in the first direction being configured to support the hub and the other end of the main support member in the first direction being configured to be connected to a carrier; and an auxiliary docking member including an adjustment assembly and a clamping assembly, the clamping assembly having a clamping cavity extending therethrough in a second direction to accommodate and fix the blade, the adjustment assembly being connected to the clamping assembly and configured to adjust a relative position between the clamping assembly and the main support member in each of at least two directions to center the blade with respect to the hub, and the second direction intersecting the first direction.

According to the assembly tooling provided in the embodiments of the present application, the assembly tooling includes the main support member and the auxiliary docking member, the main support member is configured to support the hub at a predetermined height in the first direction, and the hub can be first connected to the nacelle and then supported by the main support member; the auxiliary docking member includes the adjustment assembly and the clamping assembly, and the clamping assembly has the clamping cavity extending therethrough in the second direction and configured to accommodate and fix the blade. Since the adjustment assembly is configured to adjust the relative position between the clamping assembly and the main support member in each of the at least two directions, the relative position between the blade and the hub can be adjusted, thereby reducing the difficulty of assembling the blade and the hub and facilitating the construction of the wind turbine generator system.

In another aspect, some embodiments of the present application provide a method for constructing a wind turbine generator system. The method includes:
transporting a nacelle, a hub, a plurality of blades, and a plurality of tower sections to an area of a wind turbine foundation, each of the plurality of tower sections including a section body with end flanges respectively provided at two axial ends of the tower section and at least one of a guiding structure or a locking structure provided on the section body, the locking structure being configured to interlock with the guiding structure, and the wind turbine foundation being provided with one of another guiding structure and another locking structure;
lifting one of the plurality of tower sections above the wind turbine foundation, and interlocking the guiding structure of the one of the plurality of tower sections with the another locking structure of the wind turbine foundation or interlocking the locking structure of the one of the plurality of tower sections with the another guiding structure of the wind turbine foundation;
fixing one of the two end flanges of the one of the plurality of tower sections that is interlocked with the wind turbine foundation by fasteners;
lifting a next one of the plurality of tower sections above the one of the plurality of tower sections that is connected to the wind turbine foundation, and interlocking the guiding structure of one of the one and the next one of the plurality of tower sections with the locking structure of the other one of the one and the next one of the plurality of tower sections;
fixing, by fasteners, the one and the next one of the plurality of tower sections that are adjacent to and interlocked with each other; and
connecting the nacelle, the hub, the plurality of blades, and another one of the plurality of tower sections that is different from the one and the next one of the plurality of tower sections, to one of the plurality of tower sections that is provided on the wind turbine foundation.

According to another aspect of an embodiment of the present application, the connecting the nacelle, the hub, the plurality of blades, and another one of the plurality of tower sections that is different from the one and the next one of the plurality of tower sections, to one of the plurality of tower sections that is provided on the wind turbine foundation includes:
assembling the nacelle, the hub, the plurality of blades, and the another one of the plurality of tower sections into a spinner assembly;
lifting the spinner assembly above the wind turbine foundation, and interlocking the guiding structure of the another one of the plurality of tower sections of the spinner assembly with the locking structure of one of the plurality of tower sections that is fixed to a topmost part of the wind turbine foundation or interlocking the locking structure of the another one of the plurality of tower sections of the spinner assembly with the guiding structure of the one of the plurality of tower sections that is fixed to the topmost part of the wind turbine foundation;
fixing, by fasteners, one of the two end flanges of the another one of the plurality of tower sections of the spinner assembly to one of the two end flanges of the one of the plurality of tower sections that is fixed to a topmost part of the wind turbine foundation.

According to the method for constructing a wind turbine generator system provided in the embodiments of the present application, in the case that the wind turbine generator system needs to be constructed in a deep-sea area, large components such as the nacelle, the hub, the blades, and the tower sections can first be transported to the area of the wind turbine foundation. The section body of the tower section is provided with at least one of the guiding structure and the locking structure, and the wind turbine foundation is provided with one of another guiding structure and another locking structure. One tower section can first be lifted above the wind turbine foundation and docked with the wind turbine foundation. During the docking process, the another guiding structure on the wind turbine foundation can be docked and locked with the locking structure on the tower section, or the another locking structure on the wind turbine foundation can be docked and locked with the guiding structure on the tower section, achieving rapid docking of the wind turbine foundation and the tower section. At this time, the crane can relieve its load, and then the end flange of the tower section is fixed to the wind turbine foundation by fasteners. Similarly, after the docking of the lowermost tower section with the wind turbine foundation is completed, the next tower section is sequentially lifted and docked with the tower section already installed on the wind turbine foundation. After locking the guiding structure on one of the lowermost tower section and the next tower section and the locking structure on the other one of the lowermost tower section and the next tower section, the crane relieves its load, and the end flange of the lowermost tower section and the end flange of the next tower section are connected to each other. During the process of installing the fasteners, under the action of the guiding structure and the locking structure, the tower sections will not shake relative to each other or relative to the wind turbine foundation, ensuring safety of deep-sea construction.

For the installation of the nacelle, the hub, the blades, and the last tower section, these structures can first be transported to the floating crane vessel in the area of the wind turbine foundation, assembled into a spinner assembly, and then lifted to the uppermost tower section on the wind turbine foundation for docking. The tower section of the spinner assembly and the uppermost tower section on the wind turbine foundation are first locked by the guiding structure of one of the tower section of the spinner assembly and the uppermost tower section on the wind turbine foundation and the locking structure of the other one of the tower section of the spinner assembly and the uppermost tower section on the wind turbine foundation, and then the end flanges of the tower section of the spinner assembly and the uppermost tower section on the wind turbine foundation are connected by fasteners, which enable the wind turbine generator system to be constructed at its deep-sea machine site, reducing dependence on wharf cranes, wharf resources, and jack-up platforms, thereby reducing construction costs, avoiding the towing process of the wind turbine foundation and the entire generator set, and thus lowering transportation risks.

### BRIEF DESCRIPTION OF THE DRAWINGS

The features, advantages, and technical effects of the exemplary embodiments of the present application will be described below with reference to the accompanying drawings.
FIG. 1 is a schematic diagram of an overall structure of an assembly tooling according to an embodiment of the present application;
FIG. 2 is a schematic diagram of a partial structure of an assembly tooling according to an embodiment of the present application;
FIG. 3 is a schematic diagram of a partial structure of the assembly tooling from another perspective according to an embodiment of the present application;
FIG. 4 is a schematic diagram of a partial structure of the assembly tooling from yet another perspective according to an embodiment of the present application;
FIG. 5 is a schematic diagram of a usage state of the assembly tooling according to an embodiment of the present application;
FIG. 6 is a flowchart of a method for constructing a wind turbine generator system according to an embodiment of the present application;
FIGS. 7 to 16 are schematic construction diagrams corresponding to steps of a method for constructing a wind turbine generator system according to an embodiment of the present application;
FIG. 17 is a flowchart of a method for constructing a wind turbine generator system according to another embodiment of the present application;
FIG. 18 is a schematic diagram of a tower section according to an embodiment of the present application;
FIG. 19 is a schematic diagram of a locking structure and a guiding structure according to an embodiment of the present application;
FIG. 20 is a schematic diagram of a partial structure of a locking structure according to an embodiment of the present application;
FIG. 21 is a partial sectional view of a locking structure according to an embodiment of the present application; and
FIG. 22 is a schematic diagram of an assembly tooling cooperating with a blade from one perspective according to an embodiment of the present application.

### Reference Numerals:

10-main support member; 11-vertical column; 12-rotating assembly; 121-bearing; 1211-rotating ring; 1212-stationary ring; 122-rotation driving member; 1221-fourth motor; 1222-driving wheel;
20-auxiliary docking member; 21-clamping assembly; 21a-clamping cavity;
211-fixed support; 2111-support rod; 2112-bottom frame; 2113-support plate; 212-first driving member; 213-clamping unit; 213 1-fixed frame; 2131a-avoidance opening; 2132-clamping block; 2133-second driving member; 2133a-power source; 2133b-lead screw; 2133c-C-shaped arm; 2134-pressure sensor; 214-connecting base;
22-adjustment assembly; 221-base plate; 222-lifting unit; 2221-lifting arm; 2221a-first arm; 2221b-second arm; 2222-third driving member; 2223-top bracket; 2224-bottom bracket; 2225-adaptor block;
223-first adjustment unit; 2231-first moving platform; 2232-first guiding member; 2233-fourth driving member; 2233a-second motor; 2233b-driving lead screw;
224-second adjustment unit; 2241-second moving platform; 2242-second guiding member; 2243-fifth driving member; 2243a-third motor; 2243b-transmission wheel; 2243c-traction member;
30-reinforcement connector; 40-centering sensor; 50-first accelerometer; 60-second accelerometer;
1-hub; 1a-sensor; 1b-web plate;
2-blade; 3-nacelle; X-first direction; Y-second direction; Z-third direction.
100-wind turbine foundation;
410-second transmitter;
500-tower section; 510-section body; 520-end flange; 530-guiding structure; 531-first mounting part; 5311-slot; 532-guiding unit; 5321-first shaft segment; 5322-second shaft segment; 5323-snap-fitting groove; 540-locking structure; 541-second mounting part; 5411-mounting groove; 5412-sliding groove; 5413-first insertion slot; 5414-second insertion slot; 5415-moving groove; 542-locking unit; 5421-locking block; 5421a-arc-shaped surface; 5421b-through hole; 5422-first elastic member; 5423-positioning part; 5423a-moving post; 5424-second elastic member; 5425-adaptor ring;
600-assembly tooling;
621a-adjustment member;
700-crane;
1000-spinner assembly; 2000-floating crane vessel.

In the drawings, the same components are denoted by the same reference numerals. The drawings are not drawn to actual scale.

### DETAILED DESCRIPTION

The features and exemplary embodiments of various aspects of the present application will be described in detail below. In the following detailed description, numerous specific details are set forth to provide a thorough understanding of the present application. However, it will be apparent to those skilled in the art that the present application may be practiced without some of these specific details. The description of the embodiments below is merely intended to provide a better understanding of the present application by illustrating examples thereof. In the drawings and the following description, at least some well-known structures and techniques are not shown to avoid unnecessarily obscuring the present application; moreover, for clarity, the dimensions of some structures may be exaggerated. Furthermore, the features, structures, or characteristics described below may be combined in any suitable manner in one or more embodiments.

In the following description, the directional terms used are all the directions shown in the drawings and are not intended to limit the specific structure of the method for constructing the wind turbine generator system of the present application. In the description of the present application, it should also be noted that unless otherwise explicitly defined or limited, the terms "mounted" and "connected" should be understood broadly. For example, they can be fixedly connected, detachably connected, or integrally connected; they can be directly connected or indirectly connected. For ordinary skilled in the art, the specific meanings of the above terms in the present application may be understood based on specific circumstances.

Since wind turbine generator systems have entered the era of grid parity, the state has canceled subsidies for grid-connected electricity prices, and domestic wind turbine manufacturers are seeking ways to achieve cost reduction for their generator sets. To achieve cost reduction for the generator sets, manufacturers are engaging in technological innovations to increase the capacity of individual generator set; thus, domestic wind turbine generator systems are gradually developing towards large capacity. After the era of grid parity, large-megawatt generator sets such as 8 MW, 11 MW, 12 MW, 13 MW, and even 16 MW have successively emerged in the market, with increasingly larger sizes and heavier weights.

As nearshore project areas are gradually becoming saturated, offshore wind power projects are expanding to deep-sea areas, with project operating water depths extending from 20 m and 30 m to 50 m, 70 m, and even 100 m. For offshore wind turbine generator systems in deep-sea areas, their foundation type employs a floating foundation, which is far more expensive in terms of economy and more difficult in terms of construction compared to fixed foundations.

Currently, the construction method for floating generator sets mainly involves assembling the wind turbine onto a floating foundation via a crane at a wharf, then transporting it to the machine site by wet tow. Due to the very great weight and height of large-capacity generator sets in the era of grid parity, there are currently no larger and more suitable cranes available on the market capable of assembling large-capacity generator sets at wharves. Even if crane resources exist, the bearing capacity of wharves is limited, and there are very few domestic wharves capable of meeting such a large bearing capacity. Therefore, to reduce the construction cost of floating generator sets, the optimal approach is to install wind turbine generator sets at offshore machine sites.

Offshore installation of floating generator sets generally uses a jack-up platform to lift the generator set onto the floating foundation. The docking of components of the generator set is a static-to-dynamic docking, which is slightly difficult. As the water depth in deep-sea areas increases, in the case that the water depth exceeds 80 m, it is currently difficult to find suitable installation vessels, and only large floating crane vessels can be used to install the units. The docking of unit components by a floating crane vessel is a dynamic-to-dynamic docking, which is more difficult than that by a jack-up platform.

Therefore, faced with large-capacity units in the era of grid parity, under the conditions of scarce crane resources, wharf resources, and jack-up platform resources, how to complete the installation and operation and maintenance of large-capacity floating generator sets in deep-sea areas and reduce installation and operation and maintenance costs is a question worthy of deep consideration.

For the floating generator sets currently installed in the domestic market, in the case that the wind turbines used are small-megawatt models between 5 MW and 8 MW, the weight of the wind turbines and the hub center height are relatively small. They are all assembled onto floating foundations at wharves by cranes, with smaller crane selections and lower requirements for wharf bearing capacity. However, as floating generator sets gradually develop towards deep-sea areas in the future, the capacity of the generator sets installed on floating foundations also gradually increases, basically wind turbines of 10 MW or above. Faced with these large-capacity wind turbines with large weights and heights, it is difficult to find large-tonnage cranes in the market to meet the requirements for lifting and assembling at wharves. Meanwhile, the bearing capacity of domestic wharves is limited. If large crawler cranes need to be used, the wharf requires reinforcement, which adds to the wharf renovation costs. Moreover, for small-batch floating wind turbine projects, long-term occupation of the wharf incurs high wharf leasing fees, which brings significant construction costs to the project. Additionally, for deep-sea projects, after the floating wind turbine is installed at the wharf, it needs to be towed over a long distance from the wharf to the offshore machine site. If strong convective weather or typhoons are encountered during towing, the transportation risk is very high, and the consequences would be unimaginable.

Therefore, the installation of floating generator sets will gradually move to offshore. However, offshore installation of floating generator sets also encounters problems. As the water depth of project areas increases, jack-up platforms are limited by the performance parameters of their legs, and the available jack-up platform resources are becoming fewer. It is necessary to consider the installation scheme of using floating crane vessels to lift floating generator sets offshore. Meanwhile, for existing floating wind turbine foundations, their major component replacement scheme involves towing the entire float and turbine to the wharf for major component replacement, which makes the maintenance cost of floating generator sets very high.

It can thus be seen that, for future floating generator set projects in deep-sea areas, the development of an assembly tooling that can be used for offshore installation and operation and maintenance of floating generator sets by floating crane vessels in deep-sea areas-ensuring that the process of installing large-capacity generator sets onto floating foundations and replacing major unit components by floating crane vessels at offshore machine sites can be achieved, reducing dependence on wharf cranes, wharf resources, and jack-up platforms to thereby reduce construction and operation and maintenance costs, and eliminating the towing process of the entire floating foundation and turbine to thereby reduce transportation risks-is an urgent need in the floating wind power market after the era of grid parity.

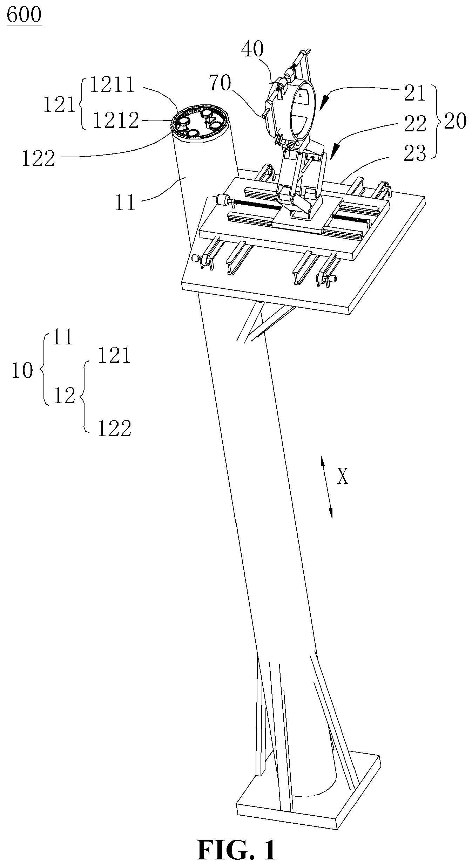

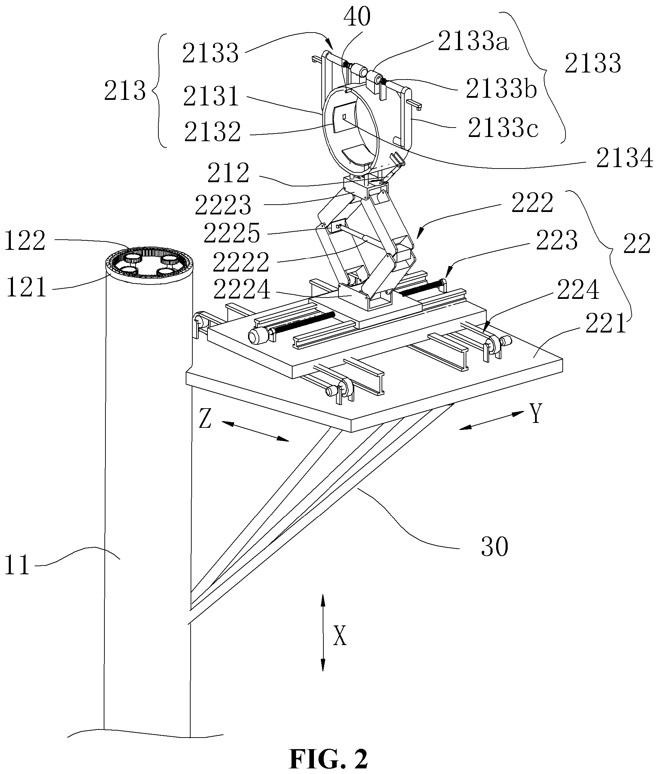

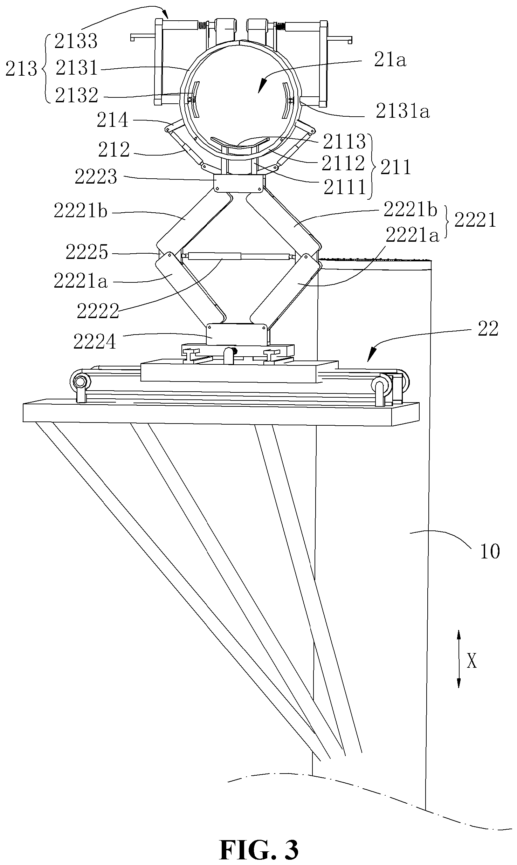

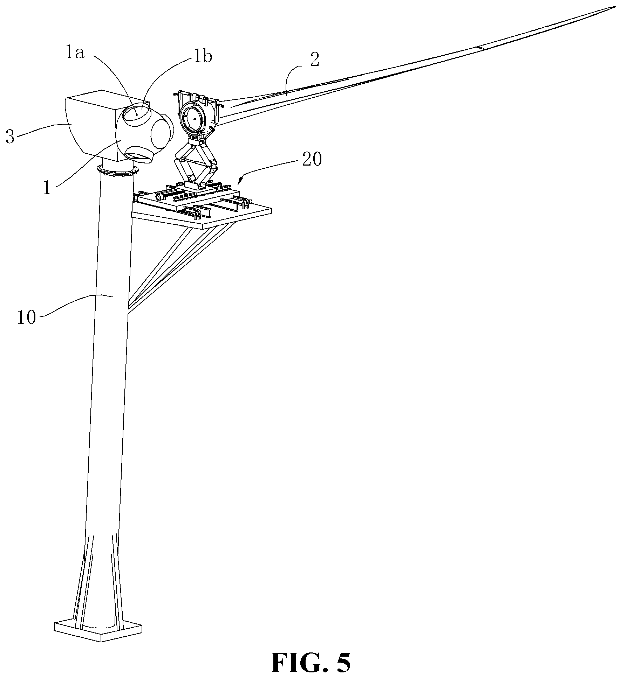

As shown in FIGS. 1 to 5, in view of the above, an embodiment of the present application provides an assembly tooling 600 configured to assemble a hub 1 and a blade 2. The assembly tooling 600 includes a main support member 10 having a predetermined height in a first direction X and an auxiliary docking member 20. One end of the main support member 10 in the first direction X is configured to support the hub 1 and the other end of the main support member 10 in the first direction X is connect to a carrier. The auxiliary docking member 20 includes an adjustment assembly 22 and a clamping assembly 21. The clamping assembly 21 has a clamping cavity 21a extending therethrough in a second direction Y to accommodate and fix the blade 2. The adjustment assembly 22 is connected to the clamping assembly 21 and is configured to adjust a relative position between the clamping assembly 21 and the main support member 10 in each of at least two directions to center the blade 2 with respect to the hub 1.

The main support member 10 can be in a tubular shape, a columnar shape, a hollow truss structure, etc., with sufficient strength to support the hub 1 or a spinner assembly (including a nacelle 3 and the hub 1). One end of the main support member 10 can be detachably connected to the nacelle 3 by fasteners. The other end of the main support member 10 can be connected to a support structure such as a carrier by welding or bolt fastening.

The auxiliary docking member 20 can be connected to the main support member 10 and supported thereby. Of course, the auxiliary docking member 20 can be provided on the carrier and supported by a support structure thereon to ensure coordination with the main support member 10.

The clamping assembly 21 can be configured to clamp and fix the blade 2. It can adopt an openable and closable clamping structure to allow placement and removal of the blade 2. Alternatively, the blade 2 can be inserted into the clamping assembly 21 by one end in its longitudinal direction to meet the clamping and fixing requirements for the blade 2.

The adjustment assembly 22 can have degrees of freedom of movement in two directions, three directions, etc. The adjustment assembly 22 drives the clamping assembly 21 to drive the blade 2 to move in at least two directions to ensure that the blade 2 is docked with the hub 1.

The first direction X can intersect with, and optionally be perpendicular to the second direction Y.

The assembly tooling provided in an embodiment of the present application includes the main support member 10 and the auxiliary docking member 20. The main support member 10 is configured to support the hub 1 at a predetermined height in the first direction X. The hub 1 can first be connected to the nacelle 3 and then supported by the main support member 10. The auxiliary docking member 20 includes the adjustment assembly 22 and the clamping assembly 21 that has a clamping cavity 21a extending therethrough in the second direction Y and that is configured to accommodate and fix the blade 2. Since the adjustment assembly 22 is configured to adjust the position of the clamping assembly 21 relative to the main support member 10 in each of at least two directions, the relative position between the blade 2 and the hub 1 can thereby be adjusted, reducing the difficulty of assembling the blade 2 and the hub 1 and facilitating the construction of the wind turbine generator system. Especially for the construction of offshore wind turbines, the carrier can be a floating crane vessel, and the assembly tooling can be fixed on the floating crane vessel to transport components such as the blade 2, the hub 1, and the nacelle 3 to the offshore machine site of the wind turbine generator system for assembly and can utilize the auxiliary docking member 20 for adjustment. Compared with assembly only using crane suspension, it can not only ensure the stability of the blade 2 in the air but also make the position adjustment of the blade 2 simpler and more accurate, thereby reducing the difficulty of assembling the blade 2 and the hub 1.

As shown in FIGS. 1 to 3, in some optional embodiments, in the assembly tooling provided in an embodiment of the present application, the clamping assembly 21 includes a fixed support 211, a first driving member 212, and a pair of clamping units 213. The pair of clamping units 213 are opposite to each other, respectively disposed at two sides of the fixed support 211, and rotatably connected to the fixed support 211. The fixed support 211 and the pair of clamping units 213 cooperate to form the clamping cavity 21a. The first driving member 212 is connected between the clamping unit 213 and the fixed support 211 and is configured to drive the clamping unit 213 to rotate relative to the fixed support 211 to clamp or release the blade 2.

The clamping assembly 21 can be connected to the adjustment assembly 22 by its fixed support 211.

According to the assembly tooling provided in an embodiment of the present application, the clamping assembly 21 is in the above structural form, which can jointly accommodate and fix the blade 2 by the clamping cavity 21a formed by the fixed support 211 and the pair of clamping units 213. The provision of the first driving member 212 and the rotational connection between the clamping assembly 21 and the fixed support 211 enable the first driving member 212 to drive the clamping unit 213 to rotate, realizing clamping and releasing of the blade 2, and ensuring stable support and release of the blade 2 by the assembly tooling.

Optionally, the pair of clamping units 213 can have identical structures and be symmetrically distributed at two sides of the fixed support 211. With the above configuration, uniform force application on both sides of the blade 2 can be ensured, meeting the stability requirement for fixing the blade 2.

In some optional embodiments, in the assembly tooling provided in an embodiment of the present application, the first driving member 212 includes a first telescopic cylinder. One of a cylinder body and a cylinder rod of the first telescopic cylinder is rotatably connected to the clamping unit 213, and the other one of the cylinder body and the cylinder rod is rotatably connected to the adjustment assembly 22.

With the above configuration, in the case that the first telescopic cylinder shortens, it can pull the pair of clamping units 213 to move away from each other, so that the clamping cavity 21a is opened to place the blade 2 therein or separate the blade 2 from the clamping assembly 21. In the case that the first telescopic cylinder extends, it can drive the pair of clamping units 213 to rotate in the opposite direction and move towards each other to close the clamping cavity 21a to clamp the blade 2. Such operation is simple and facilitates control of the clamping units 213 to easily clamping, fixing, and releasing the blade 2.

Optionally, to reliably ensure the clamping requirement of each clamping unit 213 on the blade 2, each clamping unit 213 can be connected to a first telescopic cylinder. Synchronous driving by two first telescopic cylinders can quickly achieve opening and closing of the two clamping units 213.

As shown in FIGS. 1 to 3, optionally, the fixed support 211 includes a plurality of support rods 2111, a bottom frame 2112, and a support plate 2113. The plurality of support rods 2111 are all connected to the bottom frame 2112, and partially inserted and extended into the bottom frame 2112 towards the interior of the clamping cavity 21a to be connected to the support plate 2113. The fixed support 211 can be rotatably connected to the pair of clamping units 213 by the bottom frame 2112, optionally by a hinged connection.

Optionally, the support plate 2113 can be an arc-shaped plate to match the shape of the blade 2 to ensure the clamping effect on the blade 2.

Optionally, a connecting base 214 can be provided on each clamping unit 213, and the clamping unit 213 can be rotatably connected to the first driving member 212 by the connecting base 214.

In some optional embodiments, in the assembly tooling provided in an embodiment of the present application, the clamping unit 213 includes a fixed frame 2131, a clamping block 2132, and a second driving member 2133. The fixed frame 2131 is rotatably connected to the fixed support 211, and the first driving member 212 is connected to the fixed frame 2131. The clamping blocks 2132 are located on sides of the pair of clamping units 213 facing towards each other. An avoidance opening 2131a is provided on the fixed frame 2131. The second driving member 2133 is partially inserted into the avoidance opening 2131a to be connected to the clamping block 2132. The clamping block 2132 is configured to contact with the blade 2, and the second driving member 2133 is configured to drive the clamping block 2132 to move relative to the fixed frame 2131 to clamp and fix the blade 2.

Optionally, the fixed frame 2131 can be rotatably connected to the bottom frame 2112 of the fixed support 211.The second driving member 2133 can be in clearance fit with the avoidance opening 2131a, so as to provide a degree of rotational freedom for the second driving member 2133 relative to the fixed frame 2131.

According to the assembly tooling provided in an embodiment of the present application, the clamping unit 213 is in the above structural form and can drive the clamping block 2132 to move relative to the fixed frame 2131 by the second driving member 2133, so that the clamping block 2132 can be adjusted based on blades of different models, ensuring the clamping and fixing requirement for the blade 2, improving the versatility of the assembly tooling, and guaranteeing the stability of the blade 2.

Optionally, the pair of fixed frames 2131 and the bottom frame 2112 are assembled together to form an overall circular ring structure.

In some optional embodiments, the second driving member 2133 includes a power source 2133a and an adjusting member. The adjusting member partially passes through the avoidance opening 2131a to be universally connected to the clamping block 2132. The power source 2133a is configured to drive the adjusting member to move and changes the depth to which the adjusting member is inserted into the inner side of the fixed frame 2131 through the avoidance opening 2131a.

According to the assembly tooling provided in an embodiment of the present application, the second driving member 2133 includes the power source 2133a and the adjusting member, and the power source 2133a can provide power to drive the adjusting member to at least partially move, thereby ensuring the driving effect on the clamping block 2132. By universally connecting the adjusting member to the clamping block 2132, optionally, by a universal joint, the clamping block 2132 is provided with multi-directional rotational freedom relative to the adjusting member. In the process of clamping the blade 2, an angle of the clamping block 2132 can be adjusted based on the surface of the blade 2 to ensure stability of clamping and supporting the blade 2.

Optionally, both the clamping block 2132 and the support plate 2113 can be in an arc shape. The pair of clamping blocks 2132 can be symmetrically distributed at two sides of the support plate 2113, respectively, to ensure stability of clamping and supporting.

Optionally, the second driving member 2133 can be in a form such as a telescopic cylinder, a crank-slider, or a lead screw-nut.

In some optional embodiments, the power source 2133a can include a first motor, and the adjusting member can include a lead screw 2133b and a C-shaped arm 2133c. The first motor is provided on the fixed frame 2131, and an output end of the first motor is connected to the lead screw 2133b. One free end of the C-shaped arm 2133c is sleeved over the lead screw 2133b and threadedly connected thereto, and the other end of the C-shaped arm 2133c is inserted into the interior of the fixed frame 2131 through the avoidance opening 2131a to be universally connected to the clamping block 2132.

During operation, rotation of the first motor drives the lead screw 2133b to rotate, thereby driving the C-shaped arm 2133c to move to adjust the size of the C-shaped arm 2133c inserted into the avoidance opening 2131a.

In some optional embodiments, the clamping block 2132 is an arc-shaped block. A pressure sensor 2134 is provided on a surface of the clamping block 2132 facing away from the fixed frame 2131. The power source 2133a is configured to adjust the depth to which the adjusting member is inserted into the inner side of the fixed frame 2131 through the avoidance opening 2131a, based on pressure information fed back by the pressure sensor 2134 regarding the pressure exerted by the clamping block 2132 on the blade 2.

A pressure sensor 2134 can be provided on each clamping block 2132, located on the surface of the clamping block 2132 facing towards the blade 2, and connected by ways such as bonding or embedding.

According to the assembly tooling provided in an embodiment of the present application, by providing the pressure sensor 2134, the pressure value fed back by the pressure sensor 2134 can be used to control the power source 2133a, ensuring that the pressure of the clamping block 2132 on the blade 2 is moderate. In this way, it is avoided that excessive pressure damage the surface of the blade 2, and it is also prevented that insufficient pressure leads to unstable clamping of the blade 2.

In some optional embodiments, in the assembly tooling provided in an embodiment of the present application, the adjustment assembly 22 includes a base plate 221, a first adjustment unit 223, and a lifting unit 222. The first adjustment unit 223 is connected between the base plate 221 and the lifting unit 222. The clamping assembly 21 is connected to the lifting unit 222. The overall length of the lifting unit 222 in the first direction X is adjustable. At least part of the first adjustment unit 223 is configured to drive the lifting unit 222 to move in the second direction Y relative to the base plate 221.

The base plate 221 is configured to support the first adjustment unit 223 and the lifting unit 222.

Optionally, the base plate 221 can be connected to the main support member 10, e.g., by welding.

The first direction X is optionally a height direction of the main support member 10, and the second direction Y intersects with the first direction X. Optionally, the second direction Y is perpendicular to the first direction X.

According to the assembly tooling provided in an embodiment of the present application, the adjustment assembly 22 includes the base plate 221, the first adjustment unit 223, and the lifting unit 222, so that the position of the blade 2 in the first direction X can be adjusted by adjusting the length of the lifting unit 222 in the first direction X. At the same time, the first adjustment unit 223 can drive the lifting unit 222 to move in the second direction Y, thereby driving the blade 2 to move in the second direction Y to facilitate being docked with the hub 1, specifically being docked with a yaw bearing 121 on the hub 1.

Optionally, the second direction Y can be an axial direction of a pitch bearing corresponding to the hub 1 to be docked.

In some optional embodiments, the lifting unit 222 includes a pair of lifting arms 2221 and a third driving member 2222. The lifting arm 2221 includes a first arm 2221a and a second arm 2221b that are rotatably connected to each other. The first arm 2221a is connected to the first adjustment unit 223, and the second arm 2221b is connected to the clamping assembly 21. The third driving member 2222 is connected between the pair of lifting arms 2221 and is configured to drive the first arm 2221a and the second arm 2221b to rotate relative to each other, thereby adjusting the length of the lifting unit 222 in the first direction X.

According to the assembly tooling provided in an embodiment of the present application, the lifting unit 222 is in the above structural form, which can adjust the overall height of the lifting unit 222 by changing the included angle between the first arm 2221a and the second arm 2221b in the case that the third driving member 2222 drives the first arm 2221a and the second arm 2221b to rotate relative to each other, thereby ensuring the length of the lifting unit 222 in the first direction X and meeting the position adjustment requirement of the blade 2 in the first direction X.

In some optional embodiments, the lifting unit 222 further includes a top bracket 2223 and a bottom bracket 2224 that are opposite to each other in the first direction X, and an adaptor block 2225 between the top bracket 2223 and the bottom bracket 2224. The top bracket 2223 is connected to the clamping assembly 21, and the bottom bracket 2224 is connected to the first adjustment unit 223. Each lifting arm 2221 is correspondingly provided with an adaptor block 2225. One end of the first arm 2221a of the lifting arm 2221facing towards the second arm 2221b of the lifting arm 2221 and one end of the second arm 2221b of the lifting arm 2221facing towards the first arm 2221b of the lifting arm 2221 are rotatably connected to the corresponding adaptor block 2225. One end of the first arm 2221a of the lifting arm 2221 facing away from the second arm 2221b is rotatably connected to the bottom bracket 2224, and one end of the second arm 2221b facing away from the first arm 2221a is rotatably connected to the top bracket 2223.

The third driving member 2222 is indirectly connected to two lifting arms 2221 by two adaptor blocks 2225.

The assembly tooling provided in an embodiment of the present application, with the above configuration, facilitates connection of the clamping assembly 21 and the first adjustment unit 223, while meeting the length adjustment requirement of the lifting unit 222 in the first direction X, thereby simplifying the structure and ensuring stable lifting action.

It is understood that the above form of the lifting unit 222 is merely illustrative. In some embodiments, the lifting unit 222 can include a second telescopic cylinder, one of a cylinder body and a cylinder rod of the second telescopic cylinder is connected to the clamping assembly 21 and the other one of the cylinder body and the cylinder rod of the second telescopic cylinder is connected to the first adjustment unit 223. The length adjustment requirement of the lifting unit 222 can also be met by controlling the extension and retraction of the second telescopic cylinder, thereby satisfying the position adjustment requirement of the blade 2 in the first direction X.

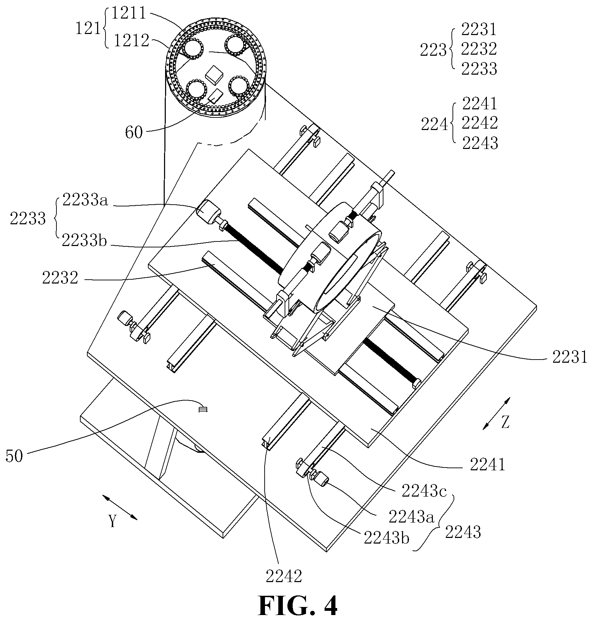

As shown in FIG. 4, in some optional embodiments, the first adjustment unit 223 includes a first moving platform 2231, a first guiding member 2232, and a fourth driving member 2233. The first guiding member 2232 extends in the second direction Y. The first moving platform 2231 is movably connected, optionally slidably connected, to the first guiding member 2232. The fourth driving member 2233 is connected to the first moving platform 2231 and configured to drive the first moving platform 2231 to reciprocate in the second direction Y relative to the first guiding member 2232. The lifting unit 222 is connected to the first moving platform 2231, and the first guiding member 2232 is directly or indirectly connected to the base plate 221.

According to the assembly tooling provided in an embodiment of the present application, the first adjustment unit 223 is in the above structural configuration, so that the adjustment assembly 22 can drive the clamping assembly 21 and the blade 2 therein to move in the second direction Y, which facilitates the high-altitude docking of the blade 2 with the hub 1 and alleviates the docking difficulties caused by using only a lifting appliance.

In some optional embodiments, the first guiding member 2232 can include two or more first guide rails each extending in the second direction Y, and the first moving platform 2231 is slidably connected to each first guide rail.

Optionally, the fourth driving member 2233 can include a second motor 2233a and a driving lead screw 2233b. The driving lead screw 2233b extends in the second direction Y and is threadedly connected to the first moving platform 2231. One end of the driving lead screw 2233b is connected to the second motor 2233a, and the other end of the driving lead screw 2233b is supported by the first moving platform 2231. The above structural form of the fourth driving member 2233 ensures smooth movement. Certainly, in some embodiments, the fourth driving member 2233 can also be in a form of a telescopic cylinder to meet the movement requirement of the first moving platform 2231 in the second direction Y.

In some optional embodiments, in the assembly tooling provided in an embodiment of the present application, the adjustment assembly 22 further includes a second adjustment unit 224. The first adjustment unit 223 is connected to the base plate 221 by the second adjustment unit 224. At least part of the second adjustment unit 224 is configured to drive the first adjustment unit 223 as a whole to move in a third direction Z relative to the base plate 221. The third direction Z intersects with both the first direction X and the second direction Y.

Optionally, the third direction Z is perpendicular to both the first direction X and the second direction Y.

In the assembly tooling provided in an embodiment of the present application, the adjustment assembly 22 further includes the second adjustment unit 224, which enables the adjustment assembly 22 to adjust the relative positions between the clamping assembly 21 and the main support member 10 in at least three directions, facilitates the assembling of the blade 2 with the hub 1 and effectively reduces the assembling difficulty.

In some optional embodiments, in the assembly tooling provided in an embodiment of the present application, the second adjustment unit 224 can include a second moving platform 2241, a second guiding member 2242, and a fifth driving member 2243. The second guiding member 2242 extends in the third direction Z. The second moving platform 2241 is movably connected, optionally slidably connected, to the second guiding member 2242. The fifth driving member 2243 is connected to the first moving platform 2231 and configured to drive the second moving platform 2241 to reciprocate in the third direction Z relative to the second guiding member 2242.

According to the assembly tooling provided in an embodiment of the present application, the second adjustment unit 224 is in the above form, featuring a simplified structure and ensuring the movement requirement of the clamping assembly 21 and the blade 2 clamped and fixed by the clamping assembly 21 in the third direction Z.

In some optional embodiments, the second guiding member 2242 can include two or more second guide rails each extending in the third direction Z, and the second moving platform 2241 is slidably connected to each second guide rail.

In some optional embodiments, the fifth driving member 2243 includes a third motor 2243a, a transmission wheel 2243b, and a traction member 2243c. The traction member 2243c includes one of a transmission belt and a transmission chain. The transmission wheel 2243b is supported by the base plate 221 and rotatably fitted to the base plate 221 by a base. The traction member 2243c is rotatably fitted to the transmission wheel 2243b and connected to the second moving platform 2241. The third motor 2243a is configured to drive the transmission wheel 2243b to rotate, thereby driving the second moving platform 2241 to move along the second guiding member 2242 by the traction member 2243c.

Optionally, the number of fifth driving members 2243 is two or more, and the two or more fifth driving members 2243 are spaced apart from each other in the second direction Y, ensuring the stability of the second moving platform 2241 during movement.

In some optional embodiments, in the assembly tooling provided in an embodiment of the present application, the base plate 221 is connected to the main support member 10, optionally by welding or bolting. A reinforcing connecting member 30 is provided between the base plate 221 and the main support member 10. The reinforcing connecting member 30 can include a plurality of support rods 2111, each having one end connected to the base plate 221 and the other end connected to the main support member 10.

The assembly tooling provided in an embodiment of the present application, with the above arrangement, improves the overall integration of the assembly tooling, reduces material consumption, and lowers the load-bearing difficulty for the floating crane vessel when assembling the blade 2 and the hub 1 at sea.

Still referring to FIGS. 1 to 4, in some optional embodiments, in the assembly tooling provided in an embodiment of the present application, the main support member 10 includes a vertical column 11 and a rotating assembly 12. The rotating assembly 12 includes a bearing 121 and a rotary driving member 122. The bearing 121 includes a rotating ring 1211 and a stationary ring 1212 that are rotatably engaged with each other. The stationary ring 1212 is connected to the vertical column 11, and the rotating ring 1211 is configured to be connected to the nacelle 3 connected to the hub 1. The rotary driving member 122 is connected to the rotating ring 1211 and configured to drive the rotating ring 1211 to rotate relative to the stationary ring 1212.

According to the assembly tooling provided in an embodiment of the present application, the main support member 10 is in the above structural form, which not only ensures the supporting effect for the nacelle 3 connected to the hub 1 but also enables planar rotation of the nacelle 3 and the hub 1 according to requirements, changing their angular relationship with the auxiliary docking member 20 to further ensure the requirement of rapid assembling the blade 2 with the hub 1.

In some optional embodiments, in the assembly tooling provided in an embodiment of the present application, the rotary driving member 122 can include a fourth motor 1221 and a driving wheel 1222. The fourth motor 1221 is fixedly connected to the vertical column 11, optionally by a connecting plate. An output end of the fourth motor 1221 is connected to the driving wheel 1222, which meshes with the rotating ring 1211. The rotating ring 1211 can be the inner race of the bearing 121 or the outer race of the bearing 121, optionally the inner race.

According to the assembly tooling provided in an embodiment of the present application, the rotary driving member 122 is in the above form, ensuring the driving effect on the rotating ring 1211 of the bearing 121, thereby meeting the rotation requirement of the spinner assembly formed by the nacelle 3 and the hub 1 taking the vertical column 11 as the center.

In some optional embodiments, the assembly tooling provided in an embodiment of the present application includes a plurality of rotary driving members 122 that are spaced apart circumferentially around the vertical column 11. The driving wheel 1222 of each rotary driving member 122 meshes with the rotating ring 1211.

In some optional embodiments, in the assembly tooling provided in an embodiment of the present application, the vertical column 11 is provided with a cavity, and all rotary driving members 122 are located in the internal cavity. The rotating ring 1211 is optionally the inner race of the bearing 121.

In some optional embodiments, the assembly tooling provided in an embodiment of the present application, by disposing the rotary driving members 122 in the internal cavity of the vertical column 11, facilitates protection of the rotary driving members 122 and avoids interference risks when assembling the blade 2 with the hub 1.

In some optional embodiments, in the assembly tooling provided in the above embodiments of the present application, the clamping assembly 21a is provided with a centering sensor 40 configured to feedback centering information between the blade 2 and the hub 1.

Optionally, during assembly, a corresponding sensor 1a can be provided on the hub 1, specifically on a web plate 1b of the hub 1 corresponding to each pitch bearing. The centering sensor 40 can sense the sensor 1a. The centering induction information between the centering sensor 40 and the sensor 1a can be used to determine a stop position for adjusting the relative position of the clamping assembly 21 with respect to the main support member 10 by the adjustment assembly 22.

Exemplarily, the centering sensor 40 can be provided in a central region of the top of the clamping assembly 21, optionally fixed to the circular ring structure formed by splicing a pair of fixed frames 2131 and the bottom frame 2112.

The sensor 1a can be provided at a central position of the web plate 1b of the hub 1, and when the two are centered and sensed, it can be determined that the clamping assembly 21 is aligned with the web plate 1b of the hub 1. Then, by extending the lifting unit 222, the center of the blade 2 can be aligned with the center of the web plate 1b of the hub 1. The above configuration facilitates position adjustment of the clamping assembly 21 and reduces the docking difficulty between the blade 2 and the hub 1.

Still referring to FIGS. 1 to 5, in some optional embodiments, in the assembly tooling provided in an embodiment of the present application, the adjustment assembly 22a is provided with a first accelerometer 50 configured to feedback a heave acceleration of the auxiliary docking member 20. The main support member 10 is provided with a second accelerometer 60 configured to feedback a heave acceleration of the main support member 10.

The heave acceleration can be understood as an acceleration in the first direction X.

When the assembly tooling is used at sea and moves with a floating crane vessel to a deep-sea area for direct assembling the hub 1 and the blade 2, the floating crane vessel will experience certain motions such as swaying due to seawater action. By providing the first accelerometer 50 and the second accelerometer 60, the heave acceleration of the auxiliary docking member 20 and the heave acceleration of the auxiliary docking member 20 can be obtained, thereby feeding back the heave acceleration of the blade 2 and the heave acceleration of the hub 1. A heave amplitude of the blade 2 can ultimately be acquired from the heave acceleration of the auxiliary docking member 20 fed back by the first accelerometer 50, and a heave amplitude of the hub 1 can ultimately be acquired from the heave acceleration of the main support member 10 fed back by the second accelerometer 60. When there is a difference between the heave amplitude of the blade 2 and the heave amplitude of the hub 1, the length of the lifting unit 222 can be adjusted to compensate for the difference, ensuring that the blade 2 and the web plate of the hub 1 remain centered even in floating or swaying states, thereby reducing the assembling difficulty of the hub 1 and the tower frame in the deep-sea area.

Docking the blade 2 with the hub 1 on a swaying floating crane vessel is most challenging because the bolts connecting the blade 2 to the pitch bearing 121 of the hub 1 are horizontal. Once the spinner assembly and the blade 2 become vertically misaligned due to the swaying of the floating crane vessel, it is difficult to insert the blade root bolts into the pitch bearing. Even if inserted, the blade root bolts will be subjected to shear forces and will be damaged. By installing this assembly tooling on a floating crane vessel for assembly work, the spinner assembly including the hub 1 and the blade 2 is first lifted to the top of the vertical column 11. In the case that the rotating assembly 12 is included, the nacelle 3 can be docked with the rotating ring 1211, and the rotary driving member 122 drives the rotating ring 1211 to rotate relative to the stationary ring 1212, thereby achieving rotation of the spinner assembly, and allowing the length direction of the spinner assembly to be parallel to the width direction of the base plate 221.

For spinner assemblies of different models with varying lengths, the second moving platform 2241 of the second adjustment unit 224 of the auxiliary docking member 20 has a movement function in the third direction Z, or a lateral movement function. The blade 2 can be moved to the front of the pitch bearing 121 of the hub 1 via the second adjustment unit 224. Actuation of the fifth driving member 2243 rotates the transmission wheel 2243b, causing the traction member 2243c to rotate periodically, thereby driving the second moving platform 2241 to move laterally on the second guiding member 2242. The first moving platform 2231 of the first adjustment unit 223 of the auxiliary docking member 20 has a movement function in the second direction Y, or a longitudinal movement function. After the blade 2 is placed on the fixed support 211 of the clamping assembly 21 and the pair of clamping units 213 have clamped the blade 2 to prevent left-right swaying, there is no need to use the crane of the floating crane vessel for longitudinal movement of the blade 2 when further inserting the blade 2 into the pitch bearing 121 of the hub 1. The blade 2 can be inserted into the pitch bearing 121 solely through the movement function of the first adjustment unit 223 in the second direction Y. The fourth driving member 2233 acts to drive the driving lead screw 2233b to rotate, causing the first moving platform 2231 to move on the first guide rail. The lifting unit 222 of the auxiliary docking member 20 has a heave compensation function in the first direction X. In one aspect, the third driving member 2222 acts to cause the first arm 2221a and the second arm 2221b to rotate relative to each other, thereby achieving raising or lowering of the lifting unit 222, which can lift the blade 2 to align the center of the blade root of the blade 2 with the center of the pitch bearing 121 of the hub 1.

In another aspect, through its automatic compensation function, the center of the blade root remains aligned with the center of the pitch bearing 121 of the hub 1. The first accelerometer 50 is provided on the adjustment assembly 22 and configured to feedback the heave acceleration of the auxiliary docking member 20. The second accelerometer 60 is provided on the main support member 10 and configured to feedback the heave acceleration of the main support member 10. The heave amplitude of the blade 2 can ultimately be acquired from the heave acceleration of the auxiliary docking member 20 fed back by the first accelerometer 50, and the heave amplitude of the hub 1 can ultimately be acquired from the heave acceleration of the main support member 10 fed back by the second accelerometer 60. In a case where there is a difference between the heave amplitude of the blade 2 and the heave amplitude of the hub 1, the length of the lifting unit 222 can be adjusted to compensate for the difference, so that the impeller and the web plate of the hub 1 remain centered even in floating or swaying states, thereby reducing the assembling difficulty of the hub 1 and the tower frame in the deep-sea area.

Furthermore, the clamping assembly 21 has a stabilizing function. Depending on the blade root diameters of different blades 2, the left and the right clamping blocks 2132 can clamp the blade 2 to prevent left-right swaying of the blade 2. Actuation of the power source 2133a drives the lead screw 2133b to rotate, allowing the C-shaped arm 2133c to drive the left and right clamping blocks 2132 to fix and release the blade 2. During the clamping process, the pressure sensor 2134 on the surface of the clamping block 2132 detects a clamping force. The clamping operation is considered to be completed only when the clamping force meets the design requirements. The clamping assembly 21 of the auxiliary docking member 20 also has an opening and closing function. Actuation of the first driving member 212 allows the paired left and right clamping units 213 on the fixed support 211 to rotate to open and close.

The assembly tooling provided in the embodiments of the present application has the following advantages:
1. even if no jack-up platforms are available for future deep-sea areas, it is still possible to use a floating crane vessel to lift large-capacity units onto floating foundations at offshore machine sites, ensuring the feasibility of offshore construction processes for future deep-sea large-capacity floating units;
2. the assembly tooling enables docking and installation of the blade 2 with the spinner assembly in a dynamic-to-dynamic state on a floating crane vessel, and through the lifting unit 222, the first accelerometer 50, and the second accelerometer 60 of the assembly tooling, the blade 2 and the hub 1 can be kept in a relatively static state, achieving higher docking efficiency of the blade 2 and safer tightening of bolts of the blade 2;
3. the assembly tooling allows installation of floating wind turbines offshore via a floating crane vessel, eliminating the need for jack-up platforms, large-tonnage wharf cranes, or wharf resource occupation requiring wharf reinforcement, significantly reducing the construction cost of large-capacity floating units, eliminating the need for towing the entire floating foundation and wind turbine when installing floating generator sets at sea, and thus greatly reducing towing costs and uncertainties during towing (e.g., typhoon interference);
4. the assembly tooling can also accommodate later major component replacement for floating generator sets, ensuring the feasibility of offshore operation and maintenance for future deep-sea large-capacity floating generator sets, which eliminates the need for the existing method of towing the entire floating body and wind turbine to a wharf for major component replacement, thereby greatly reducing the maintenance cost of floating generator sets;
5. the assembly tooling is suitable to the assembly of different models with different blades 2, the lateral moving platform of the tooling aligns different blades 2 with the pitch bearings of different hubs 1, and the spacing between the left and right clamping blocks 2132 of the supporting and fixing mechanism of the tooling is adjustable to stabilize different blades 2 and reduce swaying;
6. the assembly tooling can also be used for offshore installation and maintenance of fixed-type units via floating crane vessels; and
7. when the floating crane vessel lifts the blade 2 into the clamping assembly 21 of the auxiliary docking tooling, and if it is difficult to insert the blade 2 into the circular frame due to swaying, the pair of clamping units 213 of the clamping assembly 21 can be opened. After lifting the blade 2 onto the fixed support 211, the pair of clamping units 213 can be closed for subsequent actions, ensuring the installation requirements of the blade 2.

Although the present application has been described with reference to preferred embodiments, various improvements can be made to it and its components can be replaced with equivalents without departing from the scope of the present application. In particular, as long as there is no structural conflict, the technical features mentioned in all embodiments can be combined in any way. The present application is not limited to the specific embodiments disclosed in the text, but includes all technical solutions falling within the scope of the claims.

In another aspect, since wind turbine generator systems have officially entered the era of grid parity, domestic wind turbine manufacturers are seeking ways to achieve cost reduction for their generator sets. To achieve cost reduction for the generator sets, manufacturers are engaging in technological innovations to increase the capacity of individual generator set, thus, domestic wind turbine generator systems are gradually developing towards large capacity. After the era of grid parity, large-megawatt generator sets such as 8 MW, 11 MW, 12 MW, 13 MW, and even 16 MW have successively emerged in the market, with increasingly larger sizes and heavier weights.

Meanwhile, as nearshore project areas are gradually becoming saturated, offshore wind power projects are expanding to deep-sea areas, with project operating water depths extending from 20 m, 30 m to 50 m, 70 m and even over 100 m. For offshore wind turbine generator systems in deep-sea areas, their foundation type employs a floating foundation.

Currently, the construction method for floating generator sets mainly involves assembling the wind turbine onto a floating foundation via a crane at a wharf, then transporting it to the machine site by wet tow. Due to the very great weight and height of large-capacity generator sets in the era of grid parity, there are currently no larger and more suitable cranes available on the market capable of assembling large-capacity generator sets at wharves. Even if crane resources exist, the bearing capacity of wharves is limited, and there are very few domestic wharves capable of meeting such a large bearing capacity. Therefore, to reduce the construction cost of floating generator sets, the optimal approach is to install wind turbine generator systems at offshore machine sites.

It can thus be seen that, for future floating turbine unit projects in deep-sea areas, the development of a new method for constructing wind turbine generator systems for offshore installation by floating crane vessels in deep-sea areas is an urgent need in the floating wind power market after the era of grid parity.

Currently, the construction method for floating turbine units mainly involves assembling the wind turbine onto a floating foundation by a crane at a wharf, then transporting it to the machine site by wet tow. Due to the very high weight and height of large-capacity turbine generator systems in the era of grid parity, there are currently no larger and more suitable cranes available on the market capable of assembling large-capacity turbine units at wharves. Even if crane resources are provided, the bearing capacity of wharves is limited, and there are very few domestic wharves capable of meeting such a large bearing capacity. Therefore, to reduce the construction cost of floating turbine units, the optimal approach is to install floating turbine units at offshore machine sites. Moreover, as the water depth in deep-sea areas increases, the existing major component replacement scheme for turbine generator systems involves towing the entire float and turbine to the wharf for major component replacement, which makes the maintenance cost of floating turbine units very high.

It can thus be seen that, for future floating turbine unit projects in deep-sea areas, the development of an offshore installation, operation, and maintenance process scheme for floating turbine units for offshore installation by floating crane vessels in deep-sea areas is an urgent need in the floating wind power market after the era of grid parity.

In view of this, the present application provides a construction method for a wind turbine generator system, which can meet the installation requirements of wind turbine generator systems in deep-sea areas and reduce installation difficulty and cost.

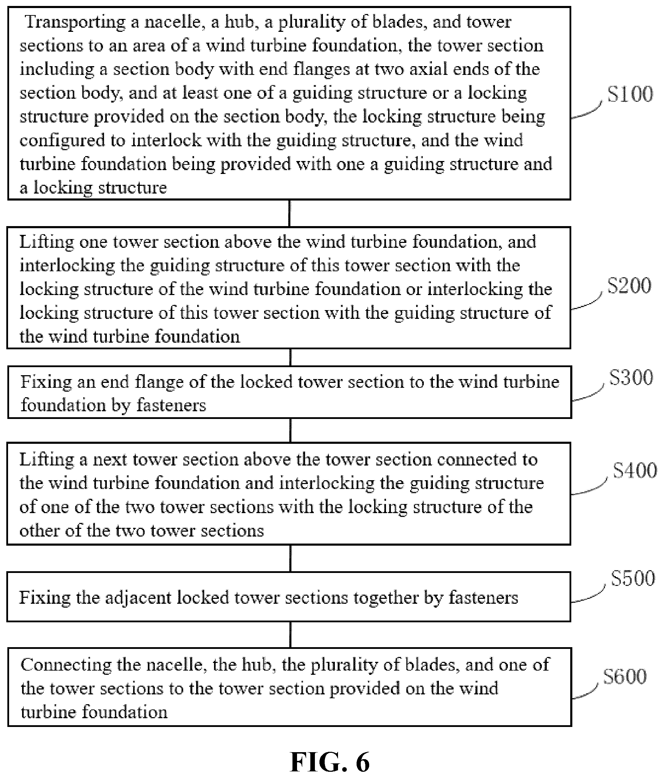

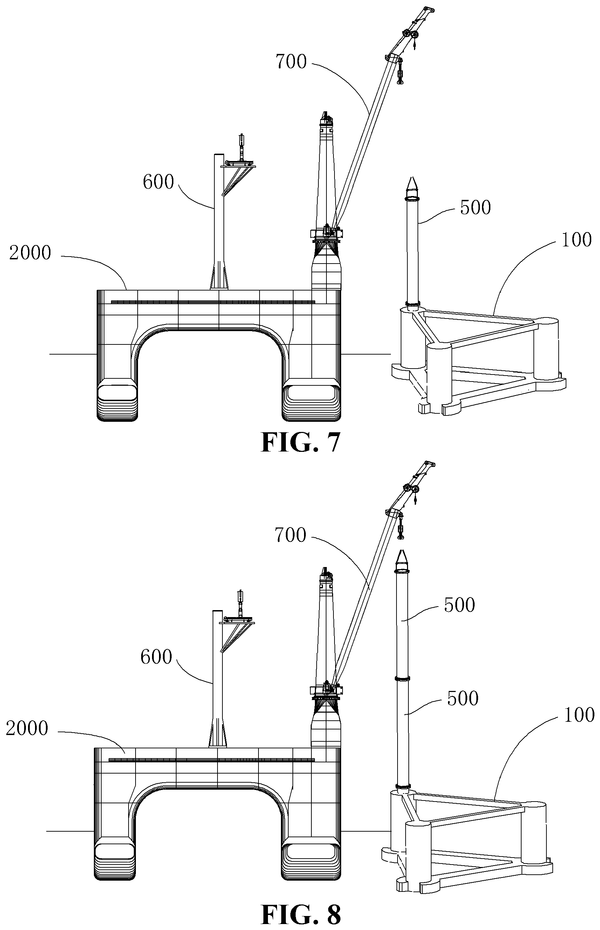

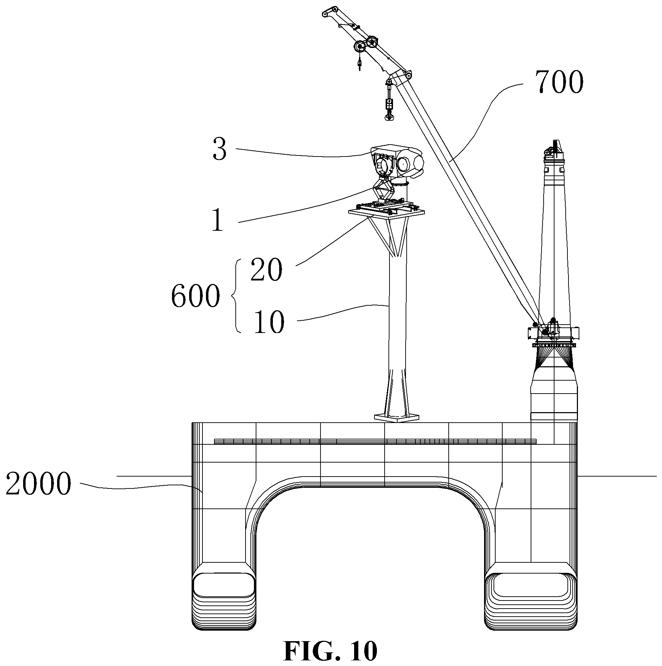

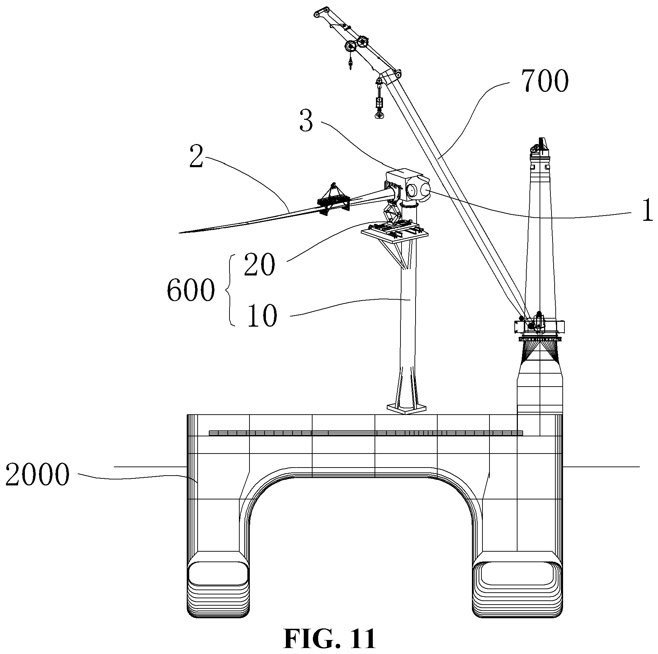

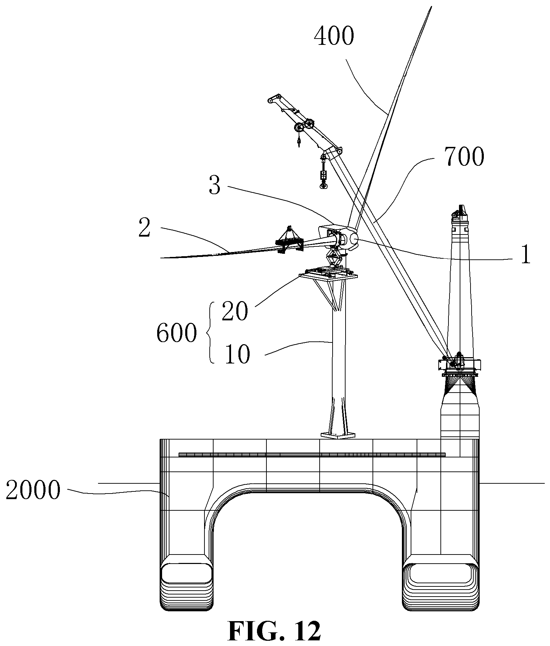

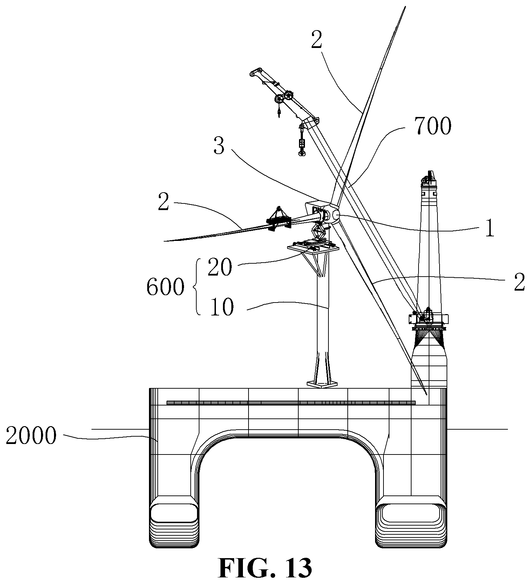

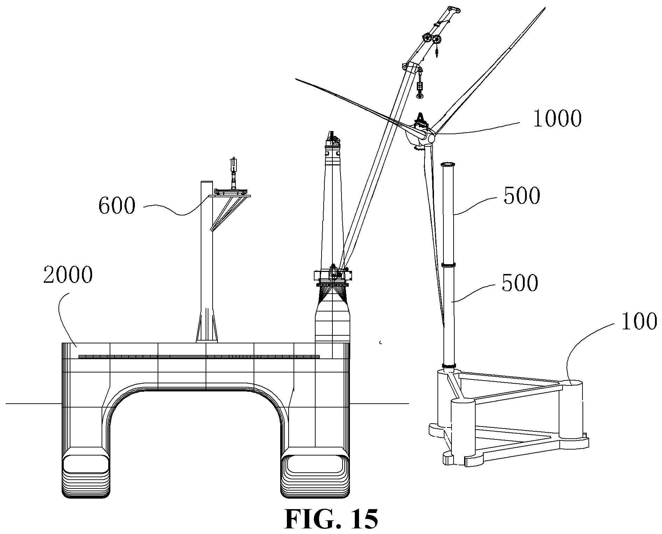

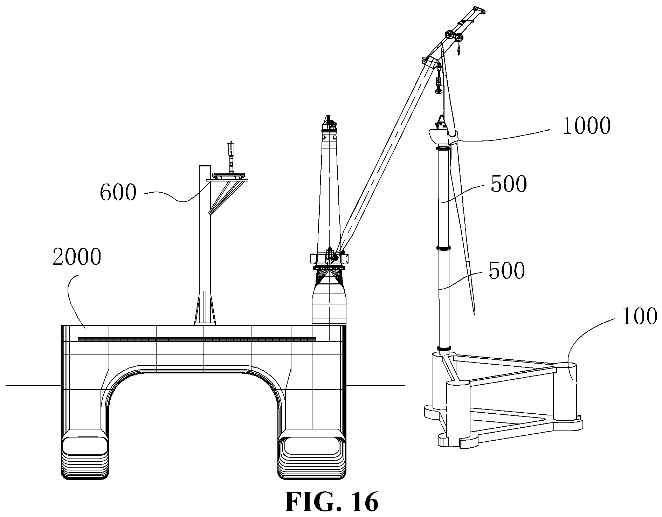

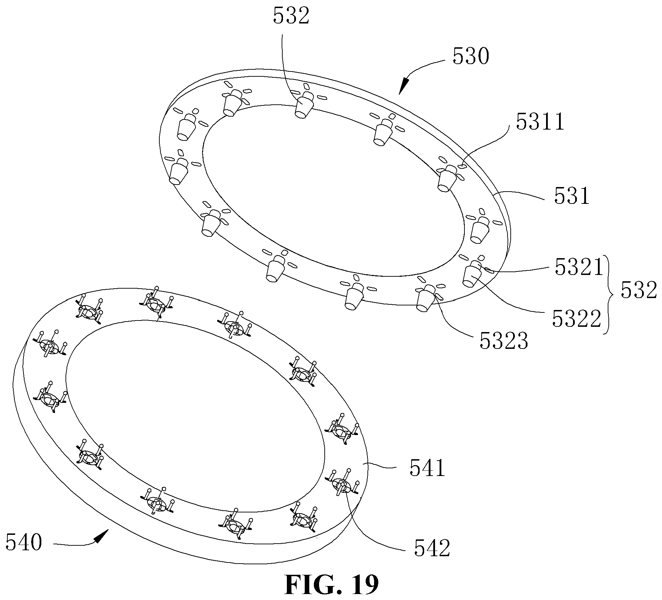

As shown in FIG. 6 and with reference to FIGS. 7 to 19, a method for constructing a wind turbine generator system provided in an embodiment of the present application includes:
S100: transporting a nacelle 3, a hub 1, a plurality of blades 2, and a plurality of tower sections 500 to an area of a wind turbine foundation 100, the tower section 500 including a section body 510 with end flanges 520 at two axial ends of the section body 510, and at least one of a guiding structure 530 or a locking structure 540 provided on the section body 510, the locking structure 540 being configured to interlock with the guiding structure 530, and the wind turbine foundation 100 being provided with one a guiding structure 530 and a locking structure 540;
S200: lifting one tower section 500 above the wind turbine foundation 100, and interlocking the guiding structure 530 of this tower section 500 with the locking structure 540 of the wind turbine foundation 100 or interlocking the locking structure 540 of this tower section 500 with the guiding structure 530 of the wind turbine foundation 100;
S300: fixing an end flange 520 of the locked tower section 500 to the wind turbine foundation 100 by fasteners;
S400: lifting a next tower section 500 above the tower section 500 connected to the wind turbine foundation 100 and interlocking the guiding structure 530 of one of the two tower sections 500 with the locking structure 540 of the other of the two tower sections 500;
S500: fixing the adjacent locked tower sections 500 together by fasteners; and
S600: connecting the nacelle 3, the hub 1, the plurality of blades 2, and one of the tower sections 500 to the tower section 500 provided on the wind turbine foundation 100.

In step S100, optionally, the number of the provided tower sections 500 can be three, four, or more. The section body 510 of each tower section 500 can include one barrel segment, or certainly, can include two or more barrel segments. In the case that the section body 510 of each tower section 500 includes two or more barrel segments, the two or more barrel segments are sequentially welded and connected to each other.

Optionally, the wind turbine foundation 100 can be a floating foundation. The form of the wind turbine foundation 100 is not limited to a form of a single-column wind turbine foundation 100, a three-column wind turbine foundation 100, a four-column wind turbine foundation 100, a damping pool wind turbine foundation 100, and a wind turbine foundation 100 in other forms.

Optionally, a floating crane vessel 2000 can be used to transport the nacelle 3, the hub 1, the plurality of blades 2, and the plurality of tower sections 500 to the area of the wind turbine foundation 100. The form of the floating crane vessel 2000 is not limited to semi-submersible barges, crane vessels, and other forms. Optionally, a crane 700 can be provided on the floating crane vessel 2000 for lifting wind turbine components.

Optionally, the guiding structure 530 and the locking structure 540 can be connected by snap-fitting or other ways. Optionally, a snap-fitting groove can be provided on one of the locking structure 540 and the guiding structure 530, and a retractable snap-fitting protrusion can be provided on the other one of the locking structure 540 and the guiding structure 530. In a locked state, the snap-fitting protrusion can extend into the snap-fitting groove and be snap-fitted and locked. In an unlocked state, the snap-fitting protrusion can be separated from the snap-fitting groove to achieve unlocking. Certainly, as an optional example, the locking structure 540 and the guiding structure 530 can also be connected to each other by electromagnetic adsorption or other means, such as locking when powered on and unlocking when powered off, enabling switching between a locked state and an unlocked state.

Optionally, at least one of the plurality of tower sections 500 500 each can include both the locking structure 540 and the guiding structure 530. The locking structure 540 and the guiding structure 530 are oppositely provided at two ends of the section body 510. Optionally, surfaces of the locking structure 540 and the guiding structure 530 facing away from each other in the axial direction of the section body 510 can be flush with end surfaces of the end flanges 520 facing away from the section body 510. Certainly, at least one of the plurality of tower sections 500 each can include only one of the locking structure 540 and the guiding structure 530, the wind turbine foundation 100 can be provided with the locking structure 540 or the guiding structure 530, which can be specifically determined based on the structure provided at the end of the tower section 500 to be docked with the wind turbine foundation 100. Taking three tower sections 500 as an example, two tower sections 500 can each include both the locking structure 540 and the guiding structure 530, while the remaining one tower section 500 can include only one of the locking structure 540 and the guiding structure 530.

In step S200, as shown in FIG. 7, the crane 700 can be used to lift the tower section 500. The floating crane vessel 2000 can be in front of the wind turbine foundation 100, and the crane 700 can use a tower lifting beam to lift the tower section 500, which includes both the guiding structure 530 and the locking structure 540, to dock the tower section 500 with the wind turbine foundation 100. Optionally, the wind turbine foundation 100 can be provided with another locking structure 540, and correspondingly, an end of the tower section 500 docked with the wind turbine foundation 100 is provided with the guiding structure 530. The tower section 500 is lowered by the crane 700 to be docked with the wind turbine foundation 100. The guiding structure 530 is engaged with and locked with the locking structure 540, enabling rapid docking between the tower section 500 and the wind turbine foundation 100.

In step S300, the crane 700 on the floating crane vessel 2000 can promptly relieve its load, and then tower bolts are installed and torqued to fix the end flange 520 of the tower section 500 to the flange at the top of the wind turbine foundation 100 by fasteners such as bolts.

In step S400, as shown in FIG. 8, the crane 700 can be used to lift the next tower section 500, the floating crane vessel 2000 can be in front of the wind turbine foundation 100, and the crane 700 can use a tower lifting beam to lift the next tower section 500, which includes both the guiding structure 530 and the locking structure 540, to dock the next tower section 500 with the wind turbine foundation 100. Optionally, the orientation of the next tower section 500 lifted by the crane 700 can be determined based on whether an end of the tower section 500 already connected above the wind turbine foundation 100, which faces away from the wind turbine foundation 100, is provided with the locking structure 540 or the guiding structure 530. Exemplarily, in the case that the end of the tower section 500 connected to the wind turbine foundation 100, which faces away from the wind turbine foundation 100, is provided with the locking structure 540, the guiding structure 530 of the next tower section 500 lifted by the crane 700 can be oriented downwards to be docked with the tower section 500 on the wind turbine foundation 100, thereby locking the relative positions between the two docked tower sections 500.

In step S500, the crane 700 on the floating crane vessel 2000 can promptly relieve its load, and then tower bolts are installed and torqued to fix the end flanges 520 of the two tower sections 500 together by fasteners such as bolts.

In step S600, the nacelle 3, the hub 1, the plurality of blades 2, and one of the tower sections 500 can be assembled into a spinner assembly 1000 on the floating crane vessel 2000, and then the spinner assembly 1000 is lifted to and connected to the tower section 500 above the wind turbine foundation 100. Certainly, the nacelle 3, the hub 1, and one of the tower sections 500 can also be lifted integrally or separately above the wind turbine foundation 100 and connected to the tower section 500 on the wind turbine foundation 100. Specifically, the nacelle 3 can be connected to the tower section 200, the hub 1 can be connected to the nacelle 3, and the blades 2 can be sequentially connected to the hub 1.

The method for constructing a wind turbine generator system provided in an embodiment of the present application, through the above construction steps, ensures that during the assembling of the tower section 500 with the wind turbine foundation 100 and during the assembling between the tower sections 500, the relative position between the tower section 500 and the wind turbine foundation 100 or the relative position between the tower sections 500 is locked by the guiding structure 530 and the locking structure 540 before fasteners such as bolts are tightened after docking. Even in the case that the wind turbine foundation 100 sways due to seawater action, the tower section 500 will not sway relative to the wind turbine foundation 100, and the tower sections 500 will not sway relative to each other, which achieves rapid construction of the tower frame, reduces docking difficulty during construction, and improves construction safety.

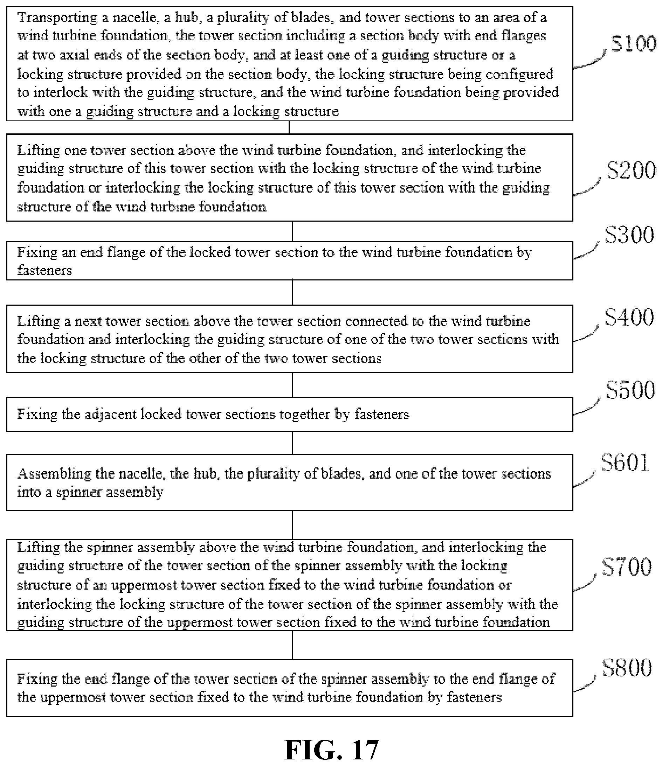

As shown in FIG. 17, in some optional embodiments, step S600 includes:
S601: assembling the nacelle 3, the hub 1, the plurality of blades 2, and one of the tower sections into a spinner assembly 1000;
S700: lifting the spinner assembly 1000 above the wind turbine foundation 100, and interlocking the guiding structure 530 of the tower section 500 of the spinner assembly 1000 with the locking structure 540 of an uppermost tower section 500 fixed to the wind turbine foundation 100 or interlocking the locking structure 540 of the tower section 500 of the spinner assembly 1000 with the guiding structure 530 of the uppermost tower section 500 fixed to the wind turbine foundation 100; and
S800: fixing the end flange 520 of the tower section 500 of the spinner assembly 1000 to the end flange 520 of the uppermost tower section 500 fixed to the wind turbine foundation 100 by fasteners.

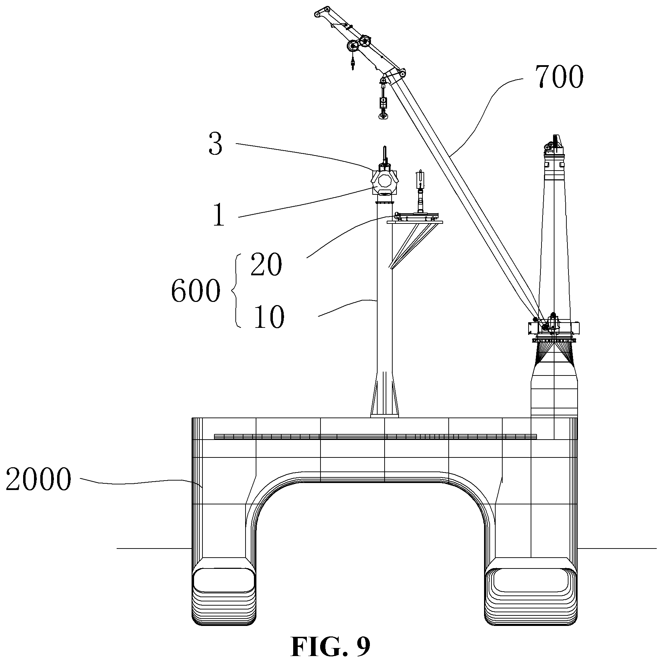

As shown in FIGS. 9 to 13, the nacelle 3, the hub 1, the plurality of blades 2, and one of the tower sections 500 can be assembled into the spinner assembly 1000 on the floating crane vessel 2000. Optionally, the nacelle 3 and the one of the tower sections 500 can be preassembled on land and then transported to the area of the wind turbine foundation 100. Certainly, the nacelle 3 and the one of the tower sections 500 can also be transported to the area of the wind turbine foundation 100 and assembled on-site on the floating crane vessel 2000 or on the assembled tower sections 500. The tower section 500 included in the spinner assembly 1000 can have one end connected to the nacelle 3, and another one end facing away from the nacelle 3 provided with one of the guiding structure 530 and the locking structure 540.

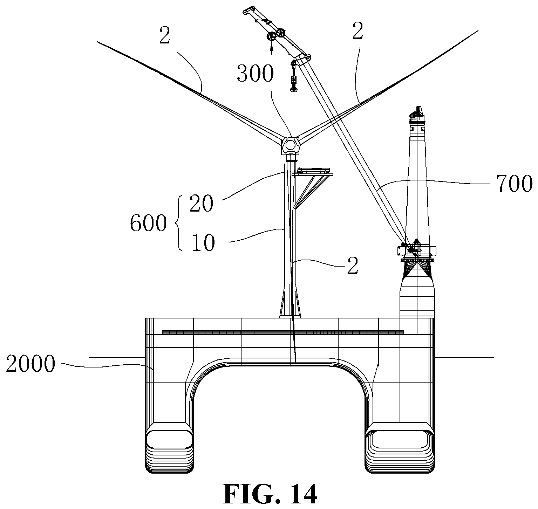

In step S700, as shown in FIGS. 14 to 16, the crane 700 can be slewed away from the partially assembled assembly, and the crane 700 can be luffed down so that its overall height is lower than the height of a horizontal blade 2. The built-in yaw system of the spinner assembly 1000 can be used to rotate the spinner assembly 1000 to face towards the sea. During the entire rotation process, the blades 2 will not collide with the crane 700.

A turning gear device can be provided within the spinner assembly 1000, and the turning gear device rotates the hub 1 upwards, so that three of the blades 2 in a "Y" state, and one of the three blades 2 that is oriented vertically downwards does not interfere with the deck surface of the floating crane vessel 2000. The crane 700 can use a composite lifting beam to lift the entire spinner assembly 1000 towards the wind turbine foundation 100, and then can rotated the entire spinner assembly 1000 to a predetermined angle, so as to center the guiding structure 530 and the locking structure 540 on the tower section 500 of the spinner assembly 1000. The spinner assembly 1000 is then lowered to dock the tower section 500 of the spinner assembly 1000 with the uppermost tower section 500 on the wind turbine foundation 100, and the tower section 500 of the spinner assembly 1000 and the uppermost tower section 500 on the wind turbine foundation 100 lock their relative positions by the guiding structure 530 and the locking structure 540.

In step S800, the crane 700 on the floating crane vessel 2000 can promptly relieve its load, and then tower bolts are installed and torqued to fix the end flanges 520 of the two tower sections 500 together by fasteners such as bolts, thereby completing the assembling of the wind turbine generator system.

The method for constructing a wind turbine generator system provided in an embodiment of the present application, through the above construction steps, ensures that during the assembling of the tower section 500 with the wind turbine foundation 100 and during the assembling of the tower sections 500, the relative position between the tower section 500 and the wind turbine foundation 100 or the relative position between the tower sections 500 is locked by the guiding structure 530 and the locking structure 540 before fasteners such as bolts are tightened after docking. Even in the case that the wind turbine foundation 100 sways due to seawater action, the tower section 500 will not sway relative to the wind turbine foundation 100, and the tower sections 500 will not sway relative to each other, which facilitates rapid construction of the tower frame, reduces docking difficulty during construction, and improves construction safety.

For the installation of the nacelle 3, the hub 1, the blades 2, and the last tower section 500, these structures can first be transported to the floating crane vessel 2000 in the area of the wind turbine foundation 100 to be assembled into the spinner assembly 1000, and then lifted to the uppermost tower section 500 on the wind turbine foundation 100 for docking. Similarly, the tower section 500 of the spinner assembly 1000 and the uppermost tower section 500 on the wind turbine foundation 100 are locked by the guiding structure 530 on one of the tower section 500 of the spinner assembly 1000 and the uppermost tower section 500 on the wind turbine foundation 100 and the locking structure 540 on the other one of the tower section 500 of the spinner assembly 1000 and the uppermost tower section 500 on the wind turbine foundation 100, and then the fasteners between the end flanges 520 are fixed, so that the wind turbine generator system can be constructed at its deep-sea machine site to reduce dependence on wharf cranes 700, wharf resources, and j ack-up platforms, thereby decreasing construction costs and eliminating the towing process of the entirety of the wind turbine foundation 100 and the generator set, which reduces transportation risks.

In some optional embodiments, in the method provided in an embodiment of the present application, the number n of the tower sections 500 satisfies: n ≥ 4. Before the step of lifting the spinner assembly 1000 above the wind turbine foundation 100, the method further includes:

repeating the step of lifting the next tower section 500 above the tower section 500 connected to the wind turbine foundation 100 and interlocking the guiding structure 530 of one of the two tower sections 500 with the locking structure 540 of the other of the two tower sections 500, and the fixing the adjacent locked tower sections 500 by fasteners until the (n-1)-th tower section 500 is installed above the wind turbine foundation 100.

Optionally, the value of n can be 4, 5, 6, or larger, and can be specifically set according to the model of the wind turbine generator system to be constructed and the required tower height.

The method provided in an embodiment of the present application, through the above configuration, can meet the construction requirements of wind turbine generator systems of different models and tower height requirements, while satisfying the installation demands of wind turbine generator systems in deep-sea areas, thereby reducing installation difficulty and costs.

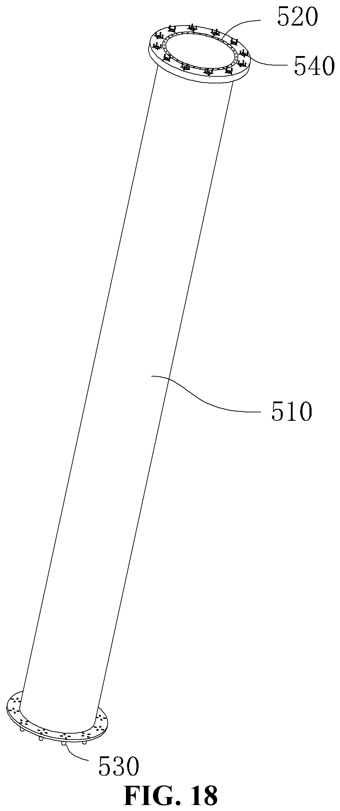

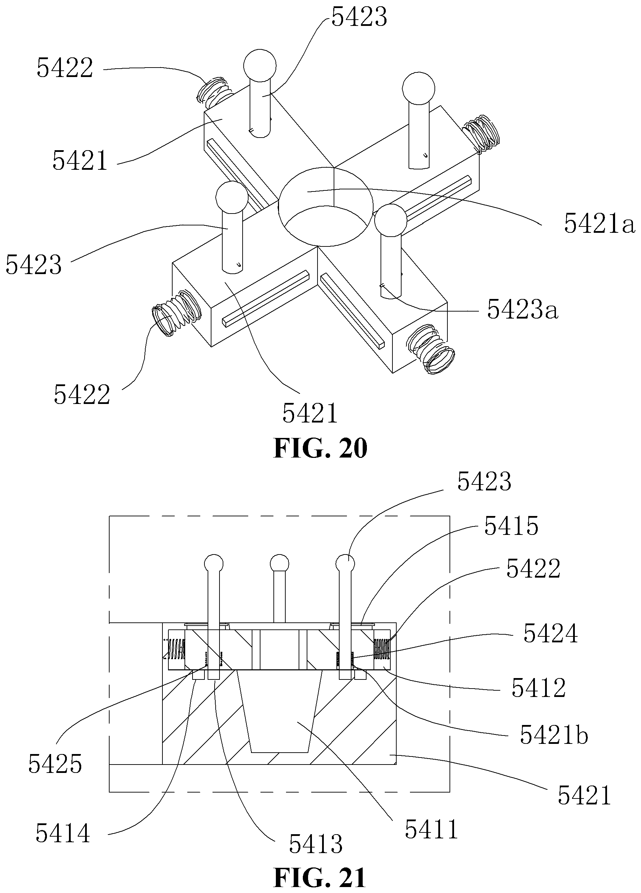

As shown in FIGS. 18 to 21, in some optional embodiments, in the method provided in an embodiment of the present application, the guiding structure 530 includes a plurality of guiding units 532 that are spaced apart from each other, and the locking structure 540 includes a plurality of locking units 542 that are spaced apart from each other. The locking unit 542 includes a mounting groove 5411 and a locking portion located in the mounting groove 5411. The guiding unit 532 at least partially extends into the mounting groove 5411 of an adjacent locking unit 542 to be locked by the locking portion.

Optionally, the plurality of guiding units 532 included in the guiding structure 530 can be spaced apart circumferentially on the tower section 500 or the wind turbine foundation 100, optionally spaced and uniformly arranged. Correspondingly, the plurality of locking units 542 included in the locking structure 540 can be spaced apart circumferentially on the tower section 500 or the wind turbine foundation 100, optionally spaced and uniformly arranged.

The above configuration ensures that when the tower section 500 docks with the wind turbine foundation 100, or when tower sections 500 dock with each other, the load-bearing capacity at all locations is uniform, further improving safety and stability during docking.

In some optional embodiments, a snap-fitting slot 5323 is provided on the guiding structure 530. In the case that the guiding structure 530 extends into the mounting groove 5411, part of the locking structure 540 extends into the snap-fitting slot 5323, ensuring locking strength.

In some optional embodiments, to ensure integration, the guiding structure 530 can include a first mounting part 531, and the locking structure 540 can include a second mounting part 541. All guiding units 532 are provided on the first mounting part 531 and connected to one of the cylindrical body 510 and the wind turbine foundation 100 by the first mounting part 531. All locking units 542 are provided on the second mounting part 541 and connected to one of the cylindrical body 510 and the wind turbine foundation 100 by the second mounting part 541.

In some optional embodiments, the guiding structure 530 includes a first shaft segment 5321 and a second shaft segment 5322 that are sequentially distributed in a same direction. The first shaft segment 5321 is connected between the second shaft segment 5322 and the first mounting part 531. A radial dimension of the second shaft segment 5322 on a side facing towards the first shaft segment 5321 in the first direction X is greater than a radial dimension of the first shaft segment 5321. The first shaft segment 5321, the second shaft segment 5322, and the first mounting part 531 form the snap-fitting slot 5323.

The guiding structure 530 adopting the above structural form facilitates cooperation with the locking structure 540 and facilitates the tower section 500 extending into the mounting groove 5411 during docking. The formed snap-fitting slot 5323 is in the form of an annular groove, which facilitates cooperation with the locking structure 540 to ensure locking strength.

In some optional embodiments, the second mounting part 541 is provided with a plurality of sliding grooves 5412 communicated with the mounting groove 5411. The locking structure 540 includes a plurality of locking blocks 5421 and first elastic members 5422. Each locking block 5421 is provided in a sliding groove 5412 and movably connected to the second mounting part 541. The first elastic member 5422 is connected between the locking block 5421 and the second mounting part 541, and the length of the first elastic member 5422 is adjustable.

The plurality of sliding grooves 5412 can be spaced apart from each other around each mounting groove 5411. The extending direction of each sliding groove 5412 intersects with, optionally is perpendicular to the first direction X.

The first elastic member 5422 includes at least one of structures such as a spring, an elastic washer, and a compressible elastic airbag.

The shape of the end of the locking block 5421 can match the shape of the snap-fitting slot 5323.

By providing the plurality of sliding grooves 5412 communicated with the mounting groove 5411, and the corresponding locking blocks 5421 and the first elastic members 5422, in the case that two adjacent tower sections 500 are assembled together or the tower section 500 and the wind turbine foundation 100 are assembled together, the second shaft segment 5322 of the guiding structure 530 first inserts into the second mounting part 541 via the mounting groove 5411. Since the radial dimension of at least part of the second shaft segment 5322 is relatively large, it first pushes the first elastic member 5422 to compress, and the locking block 5421 retreats into the sliding groove 5412. When the first shaft segment 5321 inserts into the region opposite the locking block 5421, because the radial dimension of the first shaft segment 5321 is smaller than the radial dimension of the second shaft segment 5322 facing towards the first shaft segment 5321, the locking block 5421 slides along the sliding groove 5412 under the action of the first elastic member 5422 and inserts into the snap-fitting slot 5323, locking the guiding structure 530. The assembly locking device switches to a locked state, which is simple and quick.

In some optional embodiments, the surface of the locking block 5421 facing away from the first elastic member 5422 in the second direction Y is an arc-shaped surface 5421a. In the locked state, each locking block 5421 extends into the guiding structure 530 in the second direction Y, and the arc-shaped surfaces 5421a are assembled in sequence to enclose and form a circular hole.

The circular hole formed by assembling the arc-shaped surfaces 5421a of the guiding structure 530 has the same radial dimension as the first shaft segment 5321, which ensures that in the locked state, each locking block 5421 can be snap-fitted between the first mounting part 531 and the second shaft segment 5322 and surround the first shaft segment 5321, thereby preventing relative swaying between the first locking component and the second locking component, and thus ensuring stability of the docking lock.

In some optional embodiments, the locking structure 540 further includes a positioning part 5423, and the second mounting part 541 is provided with a first insertion slot 5413 and a second insertion slot 5414 that are communicated with the sliding groove 5412. The first insertion slot 5413 is located between the second insertion slot 5414 and the mounting groove 5411. The locking block 5421 is provided with a through hole 5421b. The positioning part 5423 is inserted into the through hole 5421b and has freedom of movement relative to the locking block 5421. In the locked state, the positioning part 5423 protrudes from the locking block 5421 in the first direction X and extends into the first insertion slot 5413. In the unlocked state, the positioning part 5423 protrudes from the locking block 5421 in the first direction X and extends into the second insertion slot 5414.

Through the above arrangement, in the locked state, the positioning part 5423 protrudes from the locking block 5421 in the first direction X and extends into the first insertion slot 5413, restricting movement of the locking block 5421 and ensuring the locking requirement for the guiding structure 530. In the unlocked state, the positioning part 5423 protrudes from the locking block 5421 in the first direction X and inserts into the second insertion slot 5414 to cause the locking block 5421 to separate from the guiding structure 530, so that the guiding structure 530 can be smoothly pulled out from the second mounting part 541 and separated from the locking structure 540. In this way, smooth unlocking of the locking structure 540 and the guiding structure 530 can be ensured when the tower frame needs maintenance and two adjacent tower sections 500 need to be disassembled and separated, avoiding the locking block 5421 from sliding into the groove slot 5323 during unlocking, which would affect disassembly and assembly between the locking structure 540 and the guiding structure 530.

Optionally, the first insertion slot 5413 and the second insertion slot 5414 can extend axially and communicate with the corresponding sliding groove 5412.

The positioning part 5423 is, but is not limited to, rod-shaped, block-shaped, etc.

The positioning part 5423 can be provided to protrude from the second mounting part 541 in the first direction X.

In some optional embodiments, the locking structure 540 further includes a second elastic member 5424 provided in the through hole 5421b and connected between the locking block 5421 and the positioning part 5423, to drive the positioning part 5423 to move in the first direction X.

The second elastic member 5424 includes at least one of structures such as a spring, an elastic washer, and a compressible elastic airbag. The second elastic member 5424 is elastically deformable in the first direction X.

By providing the second elastic member 5424, in the case that the positioning part 5423 needs to protrude from the locking block 5421 in the first direction X and extend into the first insertion slot 5413 or the second insertion slot 5414, the second elastic member 5424 can push the positioning part 5423 to protrude from the locking block 5421 and extend into the first insertion slot 5413 or the second insertion slot 5414, ensuring locking or unlocking requirements.

In some optional embodiments, the through hole 5421b includes a first hole segment, a second hole segment, and a third hole segment that are distributed in a same direction, i.e., being distributed in the circumference of the tower section. The radial dimension of the second hole segment is greater than the radial dimension of the first hole segment and the radial dimension of the third hole segment. The second elastic member 5424 is located in the second hole segment and sleeved over the positioning part 5423. One end of the second elastic member 5424 in the first direction X abuts against the second mounting part 541, and the other end of the second elastic member 5424 in the first direction X abuts against an adaptor ring 5425 connected to the positioning part 5423.

The adaptor ring 5425 can be sleeved over the positioning part 5423 and fixedly connected to the positioning part 5423, optionally by welding.

The through hole 5421b adopts the above structural form, enabling the second hole segment to accommodate the second elastic member 5424. Moreover, the stepped surface between the second hole segment and the first hole segment can be used to abut against and limit one end of the second elastic member 5424 in the first direction X. The stepped surface between the second hole segment and the third hole segment can be used to abut against and limit the adaptor ring 5425, facilitating installation of the second elastic member 5424 and realization of the elastic driving function for the positioning part 5423.

In some optional embodiments, the positioning part 5423 is provided with a moving column 5423a. The second mounting part 541 is provided with a moving groove 5415. The moving column matches the shape of the moving groove 5415. The positioning part 5423 and the locking block 5421 have a first matching state and a second matching state. In the first matching state, the moving column 5423a is located in the moving groove 5415 and can move along the moving groove 5415 together with the locking block 5421. In the second matching state, the moving column 5423a separates from the moving groove 5415 and extends into the sliding groove 5412, and the positioning part 5423 is inserted into one of the first insertion slot 5413 and the second insertion slot 5414.

Optionally, the positioning part 5423 provided on each locking block 5421 is correspondingly provided with a moving column 5423a, the moving groove 5415 can be located in the second mounting part 541, and the moving groove 5415 can extend in the same direction as the sliding groove 5412.

In the first matching state, the moving column 5423a is located in the moving groove 5415 to compress the second elastic member 5424, and the axial end of the positioning part 5423 is located in the locking block 5421.

In the second matching state, the moving column 5423a can be separated from the moving groove 5415 by rotating the positioning part 5423, the second elastic member 5424 is released from being compressed, and under the action of the second elastic member 5424, the positioning part 5423 is pushed to protrude axially from the locking block 5421 and inserted into one of the first insertion slot 5413 and the second insertion slot 5414, ensuring stability of the locked state or the unlocked state.

In some optional embodiments, the positioning part 5423 is rod-shaped and protrudes from the second mounting part 541 in the first direction X. The first mounting part 531 is provided with a slot extending in the second direction Y. In the locked state, the positioning part 5423 extends into the slot 5311.

The above configuration facilitates switching of the positioning part 5423 and the locking block 5421 between the first matching state and the second matching state. Meanwhile, the provision of the slot 5311 not only achieves a dual positioning and locking effect, but also can avoid the positioning part 5423, preventing interference during docking.

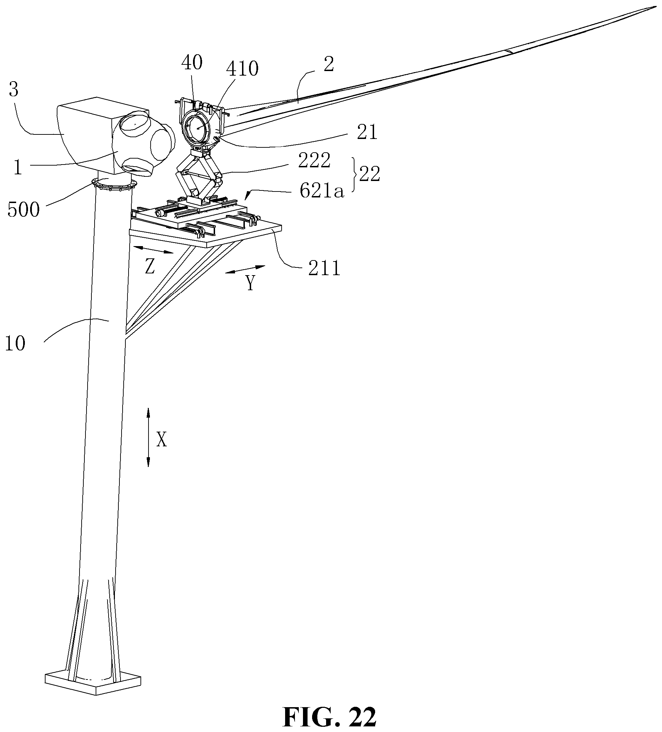

Still referring to FIGS. 6 to 16 and 22, together with FIGS. 1 to 5, in some optional embodiments, in the method provided in an embodiment of the present application, the wind turbine foundation 100 is provided at sea. Step S600 includes:
providing the floating crane vessel 2000 provided with the assembly tooling 600 and the crane 700, the assembly tooling 600 including the main support member 10 and the auxiliary docking member 20, the auxiliary docking member 20 including the adjustment assembly 22 and the clamping assembly 21 connected to the adjustment assembly 22, and the adjustment assembly 22 being configured to adjust the position of the clamping assembly 21 relative to the main support member 10;
installing the nacelle 3, the hub 1, and one of the tower sections 500 onto the main support member 10 by the crane 700; and
supporting the blade 2 by the clamping assembly 21, and adjusting the position of the clamping assembly 21 relative to the main support member 10 by the adjustment assembly 22, to dock each blade 2 with the hub 1.

The method provided in an embodiment of the present application, through the above configuration, can utilize the assembly tooling 600 to assemble the nacelle 3, one of the tower sections 500, the hub 1, and the blades 2 into the spinner assembly 1000, reducing assembling difficulty and facilitating construction of the wind turbine generator system.

In some optional embodiments, before the step of installing the nacelle 3, the hub 1, and one of the tower sections 500 onto the vertical column 11 by the crane 700, the method provided in an embodiment of the present application further includes:
assembling the nacelle 3, the hub 1, and the one of the tower sections 500 into an integral structure.

Due to the large size of the blade 2, when the blade 2 is docked with the hub 1, the hub 1 needs to be supported in mid-air by the assembly tooling 600 to complete the docking of the blade 2. The method provided in an embodiment of the present application, through the above configuration, can reduce the assembling difficulty of the spinner assembly 1000 in mid-air and lower operational risks.

It is understood that the above manners of assembling the nacelle 3, the hub 1, one of the tower sections 500, and the blades 2 into the spinner assembly on the floating crane vessel 2000 are merely some optional embodiments. In some embodiments, the wind turbine foundation 100 can be provided at sea, and step S600 includes:
providing the assembly tooling 600 and the floating crane vessel 2000 that is provided with the crane 700, and fixing the assembly tooling 600 to a tower section 500 on the wind turbine foundation 100, the assembly tooling 600 including an auxiliary docking member 20, and the auxiliary docking member 20 including an adjustment assembly 22 and a clamping assembly 21 connected to the adjustment assembly 22;
lifting the one of the tower sections 500 above the wind turbine foundation 100 by the crane 700, and interlocking the guiding structure 530 of the tower section 500 with the locking structure 540 of the uppermost tower section 500 fixed to the wind turbine foundation 100 or interlocking the locking structure 540 of the tower section 500 with the guiding structure 530 of the uppermost tower section 500 fixed to the wind turbine foundation 100;
fixing the end flange 520 of the tower section 500 to the end flange 520 of the uppermost tower section 500 fixed to the wind turbine foundation 100 by fasteners;
lifting the nacelle 3 and the hub 1 sequentially by the crane 700 and connecting them to the tower section 500 above the wind turbine foundation 100, optionally, connecting the nacelle 3 to the tower section 500, and connecting the hub 1 to the nacelle 3, that is, indirectly connecting the hub 1 to the tower section 500; and
supporting the blade 2 by the clamping assembly 21, and adjusting the relative position between the clamping assembly 21 and the tower section 500 on the wind turbine foundation 100 by the adjustment assembly 22, to dock each blade 2 with the hub 1, thereby assembling the tower section 500 connected to the nacelle 3, the nacelle 3, the hub 1, and each blade 2 into the spinner assembly 1000.

Optionally, a connection interface, such as a connection flange, can be pre-provided on the tower section 500 provided on the wind turbine foundation 100, and then the assembly tooling 600 is connected to the connection interface. After assembly is completed, the assembly tooling 600 can be detached and separated.

The assembling method provided in an embodiment of the present application, by providing the assembly tooling 600 and fixing it to the tower section 500 on the wind turbine foundation 100, can utilize tower sections 500 assembled on the wind turbine foundation 100 to jointly support components such as the nacelle 3 and the hub 1, and complete assembling of the blade 2 above the wind turbine foundation 100, reducing construction costs, eliminating the towing process of the entirety of the wind turbine foundation 100 and the generator set, thereby lowering transportation risks.

In some optional embodiments, the number n of the tower sections 500 satisfies: n ≥ 4. Before step S600, the method further includes:
repeating the steps of lifting a next tower section 500 above the tower section 500 connected to the wind turbine foundation 100 and interlocking the guiding structure 530 of one of the two tower sections 500 with the locking structure 540 of the other one of the two tower sections 500, and fixing the adjacent locked tower sections 500 by fasteners, until the (n-1)-th tower section 500 is installed above the wind turbine foundation 100. Optionally, n can be 4, 5, 6, or larger.

In some optional embodiments, in the method provided in an embodiment of the present application, in the case that the assembly tooling 600 includes the main support member 10, the main support member 10 includes a vertical column 11 and a rotating assembly 12. The rotating assembly 12 includes a bearing 121 and a rotary driving member 122. The bearing 121 includes a rotating ring 1211 and a stationary ring 1212 that are rotatably engaged with each other. The stationary ring 1212 is connected to the vertical column 11, and the rotating ring 1211 is configured to be connected to the nacelle 3. The rotary driving member 122 is connected to the rotating ring 1211 and configured to drive the rotating ring 1211 to rotate relative to the stationary ring 1212.

Before the step of supporting the blade 2 by the clamping assembly 21 and adjusting the relative position of the clamping assembly 21 with respect to the main support member 10 in each of at least two directions by the adjustment assembly 22 to dock the blade 2 with the hub 1, the method further includes:
controlling the rotary driving member 122 to drive the rotating ring 1211 to rotate relative to the stationary ring 1212 based on position information of the crane 700, so that the hub 1 is oriented towards the crane 700.

The above configuration facilitates cooperation between the assembly tooling 600 and the crane 700, reducing the assembling difficulty of the spinner assembly 1000 and improving assembly efficiency and safety.

In some optional embodiments, in the method provided in an embodiment of the present application, a sensor 1a is provided on the hub 1, and a centering sensor 40 is provided on the clamping assembly 21.

The step of supporting the blade 2 by the clamping assembly 21 and adjusting the relative position of the clamping assembly 21 with respect to the main support member 10 or the tower section 500 on the wind turbine foundation 100 by the adjustment assembly 22 to dock each blade 2 with the hub 1 includes:
pre-adjusting the position of the clamping assembly 21 relative to the main support member 10 or the tower section 500 on the wind turbine foundation 100 by the adjustment assembly 22, so that the centering sensor 40 and the sensor 1a are in centering induction;
lifting the blade 2 by the crane 700 to be clamped and fixed by the clamping assembly 21;
controlling the adjustment assembly 22 to adjust the clamping assembly 21 to drive the blade 2 to move and dock with the hub 1;
controlling the clamping assembly 21 to release the blade 2 after docking with the hub 1;
controlling the hub 1 to rotate to position the next installation location for the blade 2 towards the auxiliary docking member 20;
repeating the steps following the step of pre-adjusting the clamping assembly 21 by the adjustment assembly 22 so that the centering sensor 40 and the sensor 1a are in centering induction, such as repeating the steps of controlling the clamping assembly 21 to release the blade 2 after docking with the hub 1 and controlling the hub 1 to rotate to position the next installation location for the blade 2 towards the auxiliary docking member 20 until all blades 2 are docked with the hub 1.

Optionally, the hub 1 can include a hub web plate opposite to installation interface of the blade 2. The sensor 1a can be provided on the hub web plate, optionally at the center of the hub web plate. That is, the sensor 1a can be located at the center of the installation interface of the hub 1 for installing the blade 2. Certainly, this is an optional example; in some examples, the sensor 1a can also be provided at a predetermined distance from the center of the hub web plate, and further examples will not be listed here.

Optionally, the clamping portion of the clamping assembly 21 can be annular. The centering sensor 40 can be provided on the top or bottom of the clamping assembly 21, optionally on the central axis of the clamping assembly 21 in the first direction X. Certainly, this is an optional implementation; in some embodiments, the first transmitter can also be provided at a predetermined distance from the center of the clamping assembly 21.

The method provided in an embodiment of the present application, through the above configuration, facilitates docking of each blade 2 with the hub 1 and ensures docking accuracy.

In some optional embodiments, in the construction method provided in an embodiment of the present application, still referring to FIGS. 7 to 16 and 22, and with reference to FIGS. 1 to 5, the adjustment assembly 22 includes a base plate 221, a lifting unit 222 capable of telescoping in the first direction X, and an adjustment member 621a connected to the lifting unit 222 and configured to drive the lifting unit 222 to move in a plane intersecting with the first direction X. The adjustment member 621a is connected to the base plate 221, and the clamping assembly 21 is connected to the lifting unit 222.

The step of pre-adjusting the clamping assembly 21 by the adjustment assembly 22 so that the centering sensor 40 and the sensor 1a are in centering induction includes:
acquiring a vertical distance between the centering sensor 40 and the base plate 221 in the first direction X;
in the case that an absolute value of a difference between the vertical distance and a first threshold is greater than zero, controlling the lifting unit 222 to extend or retract in the first direction X to drive the adjustment assembly 22 to move until the absolute value of the difference equals zero; and
controlling the adjustment assembly 22 to drive the lifting unit 222 and the clamping assembly 21 to move in the third direction Z until the first transmitter and the sensor 1a are in centering induction in the second direction Y, the first direction X, the second direction Y, and the third direction Z intersecting.

Optionally, the first threshold includes, but is not limited to, the vertical distance between the sensor 1a and the base plate 221 in the first direction X.

Optionally, in the case that the centering sensor 40 and the sensor 1a are opposite and in inductive arrangement, adjusting the length of the lifting unit 222 in the first direction X can align the center of the clamping assembly 21 with the center of the installation interface, i.e., the hub web plate of the hub 1.

Optionally, moving in a plane intersecting with the first direction X can be understood as moving in multiple directions within the plane, such as moving in the second direction Y and the third direction Z.

Optionally, the angles between the first direction X, the second direction Y, and the third direction Z can rang from 80° to 100°, optionally 90°, that is, perpendicular to each other.

The method provided in an embodiment of the present application, through the above configuration, facilitates initial height adjustment of the clamping assembly 21, aligning the centering sensor 40 and the sensor 1a in height. Then, the adjustment member is controlled to drive the lifting unit 222 and the clamping assembly 21 to move in the second direction Y, so that the centering sensor 40 and the sensor 1a are centered in the third direction Z, which positions the clamping assembly 21 in front of a to-be installed area of the hub 1, and meets the centering requirement between the centering sensor 40 and the sensor 1a.

In some optional embodiments, a second transmitter 410 is provided on the blade 2. The step of controlling the adjustment assembly 22 to adjust the clamping assembly 21 to drive the blade 2 and dock it with the hub 1 includes:
controlling the lifting unit 222 to lift or lower until the second transmitter 410 and the sensor 1a are in centering induction; and
controlling the adjustment member 621a to drive the lifting unit 222 to move in the second direction Y to dock the blade 2 with the hub 1.

According to one aspect of an embodiment of the present application, prior to the step of controlling the adjustment member 621a to drive the lifting unit 222 to move in the second direction Y to dock the blade 2 with the hub 1, the method further includes:
acquiring a heave amplitude of the blade 2 in the first direction X and a heave amplitude of the hub 1 in the first direction X; and
in the case that an absolute value of a second difference between the heave amplitude of the blade 2 and the heave amplitude of the hub 1 is greater than zero, controlling the lifting unit 222 to extend or retract to drive the clamping assembly 21 to move until a displacement of the clamping assembly 21 in the first direction X equals the absolute value of the difference, then controlling the lifting unit 222 to stop extending or retracting.

In the case that the assembly tooling 600 is used for offshore assembly of a wind turbine generator system and the assembly is performed directly in the area where the wind turbine generator system will operate, the floating vessel or wind turbine foundation 100 supporting the assembly tooling 600 is in a heaving state at sea. Accordingly, due to swaying of the floating vessel or wind turbine foundation 100, the hub 1 and the blade 2 will also be in different swaying states. The above configuration ensures that the center of the web plate at the blade root of the blade 2 remains completely aligned with the center of the hub 1 of the spinner assembly, reducing assembly difficulty and improving docking accuracy.

In some optional embodiments, in the method provided in an embodiment of the present application, the step of acquiring the heave amplitude of the blade 2 in the first direction X and the heave amplitude of the hub 1 in the first direction X includes:
acquiring a heave acceleration of the blade 2 in the first direction X and a heave acceleration of the hub 1 in the first direction X;
determining a heave speed of the blade 2 based on the heave acceleration of the blade 2 and determining a heave speed of the hub 1 based on the heave acceleration of the hub 1; and
determining the heave amplitude of the blade 2 based on the heave speed of the blade 2 and determining the heave amplitude of the hub 1 based on the heave speed of the hub 1.

Optionally, accelerometers can be respectively provided on the main support member 10 or the wind turbine foundation 100 and the docking member to acquire the heave acceleration of the blade 2 in the first direction X and the heave acceleration of the hub 1 in the first direction X.

The heave acceleration data of the blade 2 in the first direction X and the heave acceleration data of the hub 1 in the first direction X can be processed, for each a first integration is performed to calculate the heave speed of the blade 2 and the heave speed of the hub 1. Then, a second integration is performed to calculate the heave amplitude of the blade 2 and the heave amplitude of the hub 1.

The heave amplitude of the blade 2 in the first direction X and the heave amplitude of the hub 1 in the first direction X that are measured by the above method are rapid and accurate, facilitating the requirement that the blade 2 and the hub 1 remain aligned in the second direction Y prior to docking.

In some optional embodiments, in the control method provided in an embodiment of the present application, in the case that the absolute value of the second difference between the heave amplitude of the blade 2 and the heave amplitude of the hub 1 is greater than zero, the step of controlling the lifting unit 222 to extend or retract in the first direction X to drive the clamping assembly 21 to move until the displacement of the clamping assembly 21 in the first direction X equals the absolute value of the second difference, and then controlling the lifting unit 222 to stop extending or retracting, includes:
in the case that the second difference is greater than zero, controlling the lifting unit 222 to retract and lower the clamping assembly 21 until the displacement of the clamping assembly 21 in the first direction X equals the absolute value of the second difference, and then controlling the lifting unit 222 to stop retracting; and
in the case that the second difference is smaller than zero, controlling the lifting unit 222 to extend and lift the clamping assembly 21 until the displacement of the clamping assembly 21 in the first direction (X) equals the absolute value of the second difference, and then controlling the lifting unit 222 to stop extending.

In the case that the second difference is greater than zero, i.e., the heave amplitude of the blade 2 is larger than the heave amplitude of the hub 1, the lifting unit 222 is controlled to retract. The displacement value at the end of the lifting unit 222 connected to the clamping assembly 21 is detected and compared with the absolute value of the second difference. If the displacement value equals the absolute value of the second difference, the lifting unit 222 is controlled to stop acting and no longer retracts. If there is still a deviation between the displacement value and the absolute value of the second difference, the lifting unit 222 is controlled to continue acting and retracting. During the retracting process, the displacement value at the end of the lifting unit 222 connected to the clamping assembly 21 can be continuously obtained and compared with the absolute value of the second difference, until the measured displacement value equals the absolute value of the second difference, and then the lifting unit 222 is controlled to stop extending.

In the case that the second difference is smaller than zero, i.e., the heave amplitude of the blade 2 is lower than the heave amplitude of the hub 1, the lifting unit 222 is controlled to extend. The displacement value at the end of the lifting unit 222 connected to the clamping assembly 21 is detected and compared with the absolute value of the second difference. If the displacement value equals the absolute value of the second difference, the lifting unit 222 is controlled to stop acting and no longer extends. If there is still a deviation between the displacement value and the absolute value of the second difference, the lifting unit 222 is controlled to continue acting and extending. During the extending process, the displacement value at the end of the lifting unit 222 connected to the clamping assembly 21 can be continuously obtained and compared with the absolute value of the second difference, until the measured displacement value equals the absolute value of the second difference, and then the lifting unit 222 is controlled to stop extending. In this way, the heave compensation function of the lifting unit 222 ensures that the center of the blade root of the blade 2 remains completely aligned with the center of the web plate of the hub 1.

Optionally, in the method provided in an embodiment of the present application, the clamping assembly 21 of the assembly tooling 600 involved can include a fixed support 211, a first driving member 212, and a pair of clamping units 213. The pair of clamping units 213 are oppositely distributed at two sides of the fixed support 211 and rotatably connected to the fixed support 211. The first driving member 212 is connected between the clamping unit 213 and the fixed support 211.

Extension or retraction of the first driving member 212 realizes rotation between the clamping unit 213 and the fixed support 211, thereby opening or releasing the clamping assembly 21.

Optionally, the adjustment member 621a can include a first adjustment unit 223 and a second adjustment unit 224. The first adjustment unit 223 is connected between the second adjustment unit 224 and the lifting unit 222. The clamping assembly 21 is connected to the lifting unit 222. The overall length of the lifting unit 222 in the first direction X is adjustable. The first adjustment unit 223 is configured to at least partially drive the lifting unit 222 to move in the second direction Y relative to the base plate 221. The second adjustment unit 224 is configured to at least partially drive the first adjustment unit 223 and the lifting unit 222 to move in the third direction Z relative to the base plate 221.

The base plate 221 is configured to support the first adjustment unit 223, the second adjustment unit 224, and the lifting unit 222.

Optionally, the base plate 221 can be fixedly connected to the main support member 10 or the wind turbine foundation 100, optionally by welding, or detachably connected to the main support member 10 or the wind turbine foundation 100. Optionally, a reinforcing connecting member can be provided between the base plate 221 and the main support member 10.

The first direction X is optionally the height direction of the main support member 10. The third direction Z, the second direction Y, and the first direction (X) intersect, optionally being perpendicular to each other.

By configuring the adjustment assembly 22 to include the base plate 221, the adjustment member 621a, and the lifting unit 222, the position of the blade 2 in the first direction X can be adjusted by adjusting the length of the lifting unit 222 in the first direction X. Meanwhile, the first adjustment unit 223 can drive the lifting unit 222 to move in the second direction Y, thereby driving the blade 2 to move in the second direction Y, facilitating docking with the hub 1, specifically docking with the bearing 121 on the hub 1.

Optionally, the second direction Y can be the axial direction of the pitch bearing corresponding to the hub 1 to be docked.

Optionally, the lifting unit 222 includes a pair of lifting arms 2221 and a third driving member 2222. Each lifting arm 2221 includes a first arm and a second arm that are rotatably connected to each other. The first arm is connected to the first adjustment unit 223, and the second arm is connected to the clamping assembly 21. The third driving member 2222 is connected between the pair of lifting arms 2221 and configured to drive the first arm and the second arm to rotate relative to each other, thereby adjusting the length of the lifting unit 222 in the first direction X.

Optionally, the lifting unit 222 is in the above structural form. When the third driving member 2222 drives the first arm and the second arm to rotate relative to each other, the overall height adjustment of the lifting unit 222 can be achieved by adjusting the included angle between the first arm and the second arm, thereby ensuring the length of the lifting unit 222 in the first direction X and meeting the position adjustment requirement of the blade 2 in the first direction X.

It is understood that the lifting unit 222 in the above form is merely an optional embodiment. In some embodiments, the lifting unit 222 can include a telescopic member. One of a cylinder body and a cylinder rod of the telescopic member is connected to the clamping assembly 21, and the other is connected to the first adjustment unit 223. Controlling the extension and retraction of the telescopic member can also ensure the length adjustment requirement of the lifting unit 222, thereby meeting the position adjustment requirement of the blade 2 in the first direction X.

In some optional embodiments, the first adjustment unit 223 can include a first moving platform 2231, a first guiding member 2232, and a fourth driving member 2233. The first guiding member 2232 extends in the third direction Z. The first moving platform 2231 is movably connected, optionally slidably connected to the first guiding member 2232. The fourth driving member 2233 is connected to the first moving platform 2231 and configured to drive the first moving platform 2231 to reciprocate in the third direction Z relative to the first guiding member 2232. The lifting unit 222 is connected to the first moving platform 2231. The first guiding member 2232 can be directly or indirectly connected to the base plate 221.

Optionally, the second adjustment unit 224 can include a second moving platform 2241, a second guiding member 2242, and a fifth driving member 2243. The second guiding member 2242 extends in the third direction Z. The second moving platform 2241 is movably connected, optionally slidably connected to the second guiding member 2242. The fifth driving member 2243 is connected to the first moving platform 2231 and configured to drive the second moving platform 2241 to reciprocate in the third direction Z relative to the second guiding member 2242.

The second adjustment unit 224 is in the above form, featuring a simplified structure and ensuring the movement requirement of the clamping assembly 21 and the blade 2 fixedly clamped by it in the third direction Z.

In some optional implementations, the construction method provided in an embodiment of the present application further includes: in the case that the blade 2 is damaged, removing the fasteners connecting the end flange 520 of the tower section 500 of the spinner assembly 1000 to the end flange 520 of the uppermost tower section 500 fixed to the wind turbine foundation 100; and
controlling the guiding structure 530 of the tower section 500 of the spinner assembly 1000 and the locking structure 540 of the uppermost tower section 500 fixed to the wind turbine foundation 100 to be in an unlocked state or controlling the locking structure 540 of the tower section 500 of the spinner assembly 1000 and the guiding structure 530 of the uppermost tower section 500 fixed to the wind turbine foundation 100 to be in an unlocked state, and lifting the spinner assembly 1000 to disassembly the entire spinner assembly 1000 onto the assembly tooling 600 of the floating crane vessel 2000 for replacing blade 2.

Through the above configuration, maintenance and replacement of damaged components can be performed in the area of the wind turbine foundation 100, without towing the entire wind turbine generator system to a wharf for major component replacement, thereby reducing maintenance costs and difficulty, and improving maintenance safety.

The method provided in an embodiment of the present application has the following advantages:
1. by adopting the construction method provided in the embodiment, a large-capacity generator set can be lifted onto the floating wind turbine foundation 100 by the floating crane vessel 2000 at an offshore machine site, ensuring the feasibility of the construction method for future deep-sea large-capacity wind turbine generator systems;
2. by adopting the construction method provided in the embodiment, there is no need to select a large-tonnage wharf crane at a wharf, nor to occupy wharf resources to renovate the bearing capacity of the wharf, nor to be limited by jack-up platform resources due to project water depth. This can greatly reduce the construction cost of large-capacity wind turbine generator systems. meanwhile, during offshore installation of the wind turbine generator system, there is no need for overall towing of the wind turbine foundation 100 and the generator set, greatly reducing towing costs and uncertain risks during towing (such as typhoon interference);
3. by adopting the construction method provided in the embodiment, major component replacement for deep-sea floating generator sets in the later stage can also be accommodated, especially replacing the blade 2; the spinner assembly, three blades 2, and the top tower section can be lifted onto the floating crane vessel 2000 for replacing the blade 2, and then the replaced complete generator set can be lifted onto the floating foundation, which ensures the feasibility of major component replacement for deep-sea floating generator set, eliminating the need for the existing method of towing the entirety of the floating body and the wind turbine to a wharf for major component replacement, and thus greatly reducing the maintenance cost of floating generator set; and
4. the method provided in the embodiment can also be used for offshore construction of future deep-sea fixed-type units, using the floating crane vessel 2000 for lifting and operation and maintenance.

Although the present application has been described with reference to preferred embodiments, various improvements can be made thereto and equivalents can be substituted for components thereof without departing from the scope of the present application. In particular, as long as there is no structural conflict, the various technical features mentioned in the embodiments can be combined in any manner. The present application is not limited to the specific embodiments disclosed herein, but includes all technical solutions falling within the scope of the claims.

## Claims

1. An assembly tooling, configured to assemble a hub and a blade, and comprising:
a main support member having a predetermined height in a first direction, one end of the main support member in the first direction being configured to support the hub, and the other end of the main support member in the first direction being configured to be connected to a carrier; and
an auxiliary docking member comprising an adjustment assembly and a clamping assembly, the clamping assembly having a clamping cavity extending therethrough in a second direction to accommodate and fix the blade, the adjustment assembly being connected to the clamping assembly and configured to adjust a relative position between the clamping assembly and the main support member in each of at least two directions to center the blade with respect to the hub, and the second direction intersecting the first direction.

2. The assembly tooling according to claim 1, wherein the clamping assembly comprises:
a fixed support;
first driving members; and
a pair of clamping units opposite to each other, respectively disposed at two sides of the fixed support, and rotatably connected to the fixed support, the fixed support and the pair of clamping units forming the clamping cavity, each of the first driving members being connected between the fixed support and one clamping unit of the pair of clamping units and configured to drive the clamping unit to rotate relative to the fixed support to clamp or release the blade.

3. The assembly tooling according to claim 2, wherein each of the first driving members comprises a first telescopic cylinder comprising a cylinder body and a cylinder rod, one of the cylinder body and the cylinder rod being rotatably connected to the clamping unit, and the other one of the cylinder body and the cylinder rod being rotatably connected to the adjustment assembly.

4. The assembly tooling according to claim 2, wherein each of the pair of clamping units comprises:
a fixed frame rotatably connected to the fixed support and provided with an avoidance opening, the first driving member being connected to the fixed frame;
a clamping block located on a side of each of the pair of clamping units facing towards the other one of the pair of clamping unit; and
a second driving member partially inserted into the avoidance opening and connected to the clamping block, the clamping block being configured to contact the blade, the second driving member being configured to drive the clamping block to move relative to the fixed support to clamp and fix the blade.

5. The assembly tooling according to claim 4, wherein the second driving member comprises:
a power source; and
an adjusting member partially passing through the avoidance opening and universal connected to the clamping block, the power source being configured to drive the adjusting member to move and adjust a depth to which the adjusting member is inserted into an inner side of the fixed frame through the avoidance opening.

6. The assembly tooling according to claim 5, wherein
the clamping block is an arc-shaped block;
a pressure sensor is provided on a surface of the clamping block facing away from the fixed frame; and
the power source is configured to adjust, based on information of a pressure exerted by the clamping block on the blade that is fed back by the pressure sensor, the depth to which the adjusting member is inserted into the inner side of the fixed frame through the avoidance opening.

7. The assembly tooling according to claim 1, wherein the adjustment assembly comprises:
a base plate;
a first adjustment unit; and
a lifting unit, the first adjustment unit being connected between the base plate and the lifting unit, the clamping assembly being connected to the lifting unit, an overall length of the lifting unit in the first direction being adjustable, at least a part of the first adjustment unit being configured to drive the lifting unit to move relative to the base plate in the second direction.

8. The assembly tooling according to claim 7, wherein
the lifting unit comprises a pair of lifting arms and a third driving member, each lifting arm of the pair of lifting arms comprising a first arm and a second arm that are rotatably connected to each other, the first arm being connected to the first adjustment unit, the second arm being connected to the clamping assembly, the third driving member being connected between the pair of lifting arms and configured to drive the first arm and the second arm to rotate relative to each other to adjust a length of the lifting unit in the first direction; and/or
the lifting unit comprises a second telescopic cylinder comprising a cylinder body and a cylinder rod, one of the cylinder body and the cylinder rod being connected to the clamping assembly, and the other one of the cylinder body and the cylinder rod being connected to the first adjustment unit.

9. The assembly tooling according to claim 7, wherein the adjustment assembly further comprises a second adjustment unit, the first adjustment unit being connected to the base plate by the second adjustment unit, at least a part of the second adjustment unit being configured to drive the first adjustment unit as a whole to move relative to the base plate in a third direction intersecting both the first direction and the second direction.

10. The assembly tooling according to claim 7, wherein
the base plate is connected to the main support member; and
a reinforcing connecting member is provided between the base plate and the main support member.

11. The assembly tooling according to any one of claims 1 to 10, wherein the main support member comprises:
a vertical column; and
a rotating assembly comprising a bearing and a rotation driving member, the bearing comprising a rotating ring and a stationary ring that are rotatably engaged with each other, the stationary ring being connected to the vertical column, the rotating ring being configured to connect to a nacelle connected to the hub, and the rotation driving member being connected to the rotating ring and configured to drive the rotating ring to rotate relative to the stationary ring.

12. The assembly tooling according to any one of claims 1 to 10, wherein the clamping assembly is provided with a centering sensor configured to feedback centering information between the blade and the hub.

13. The assembly tooling according to any one of claims 1 to 10, wherein the adjustment assembly is provided with a first accelerometer configured to feedback a heave acceleration of the auxiliary docking member; and
the main support member is provided with a second accelerometer configured to feedback a heave acceleration of the main support member.

14. A method for constructing a wind turbine generator system, comprising:
transporting a nacelle, a hub, a plurality of blades, and a plurality of tower sections to an area of a wind turbine foundation, wherein
each of the plurality of tower sections comprises:
a section body with end flanges respectively provided at two axial ends of the tower section, and
at least one of a guiding structure or a locking structure provided on the section body, the locking structure being configured to interlock with the guiding structure; and
the wind turbine foundation is provided with one of a guiding structure and a locking structure;
lifting one of the plurality of tower sections above the wind turbine foundation, and interlocking the guiding structure of the one of the plurality of tower sections with the locking structure of the wind turbine foundation or interlocking the locking structure of the one of the plurality of tower sections with the guiding structure of the wind turbine foundation;
fixing one of the end flanges of the one of the plurality of tower sections that is interlocked with the wind turbine foundation by fasteners;
lifting a next one of the plurality of tower sections above the one of the plurality of tower sections that is connected to the wind turbine foundation, and interlocking the guiding structure of one of the one and the next one of the plurality of tower sections with the locking structure of the other one of the one and the next one of the plurality of tower sections;
fixing, by fasteners, the one and the next one of the plurality of tower sections that are adjacent to and interlocked with each other; and
connecting the nacelle, the hub, the plurality of blades, and another one of the plurality of tower sections that is different from the one and the next one of the plurality of tower sections, to one of the plurality of tower sections that is provided on the wind turbine foundation.

15. The method according to claim 14, wherein the connecting the nacelle, the hub, the plurality of blades, and another one of the plurality of tower sections that is different from the one and the next one of the plurality of tower sections, to one of the plurality of tower sections that is provided on the wind turbine foundation comprises:
assembling the nacelle, the hub, the plurality of blades, and the another one of the plurality of tower sections into a spinner assembly;
lifting the spinner assembly above the wind turbine foundation, and interlock the guiding structure of the another one of the plurality of tower sections of the spinner assembly with the locking structure of an uppermost tower section of the plurality of tower sections that is fixed to the wind turbine foundation, or interlocking the locking structure of the another one of the plurality of tower sections of the spinner assembly with the guiding structure of the uppermost tower section of the plurality of tower sections that is fixed to the wind turbine foundation; and
fixing, by fasteners, one of the end flanges of the another one of the plurality of tower sections of the spinner assembly to one of the end flanges of the uppermost tower section of the plurality of tower sections that is fixed to the wind turbine foundation.

16. The method according to claim 15, wherein
a number n of the plurality of tower sections satisfies: n ≥ 4; and
before the lifting the spinner assembly above the wind turbine foundation, the method further comprises:
repeating the lifting a next one of the plurality of tower sections above the one of the plurality of tower sections connected to the wind turbine foundation, and interlocking the guiding structure of one of the one and the next one of the plurality of tower sections with the locking structure of the other one of the one and the next one of the plurality of tower sections, and the fixing, by fasteners, the one and the next one of the plurality of tower sections that are adjacent to and interlocked with each other until the (n-1)-th tower section of the plurality of tower sections is installed above the wind turbine foundation.

17. The method according to claim 15, wherein
the guiding structure of each of the plurality of tower sections and the guiding structure of the wind turbine foundation each comprise a plurality of guiding units that are spaced apart; and
the locking structure of each of the plurality of tower sections and the guiding structure of the wind turbine foundation each comprise a plurality of locking units that are spaced apart, each of the plurality of locking units comprising a mounting groove and a locking portion located in the mounting groove, and each of the plurality of guiding units being configured to at least partially insert into the mounting groove of one of the plurality of locking units that is adjacent to the guiding unit and being locked by the locking portion of the one of the plurality of locking units that is adjacent to the guiding unit.

18. The method according to claim 15, wherein
the wind turbine foundation is provided at sea; and
the assembling the nacelle, the hub, the plurality of blades, and the another one of the plurality of tower sections into a spinner assembly comprises:
providing a floating crane vessel provided with an assembly tooling and a crane, wherein the assembly tooling comprises:
a support member, and
an auxiliary docking member comprising an adjustment assembly and a clamping assembly connected to the adjustment assembly, the adjustment assembly being configured to adjust a position of the clamping assembly relative to the support member;
installing the nacelle, the hub, and the another one of the plurality of tower sections onto the support member by the crane; and
supporting each of the plurality of blades by the clamping assembly, and adjusting the position of the clamping assembly relative to the support member by the adjustment assembly to dock of the blade with the hub.

19. The method according to claim 18, before the installing the nacelle, the hub, and the another one of the plurality of tower sections onto the vertical column by the crane, the method further comprising:
assembling the nacelle, the hub, and the another one of the plurality of tower sections to form an integral structure.

20. The method according to claim 18, wherein
the support member comprises:
a vertical column, and
a rotating assembly comprising a bearing and a rotation driving member, the bearing comprising a rotating ring and a stationary ring that are rotatably engaged with each other, the stationary ring being connected to the vertical column, the rotating ring being configured to connect to the nacelle, and the rotation driving member being connected to the rotating ring and configured to drive the rotating ring to rotate relative to the stationary ring; and
before the supporting each of the plurality of blades by the clamping assembly and adjusting the position of the clamping assembly relative to the support member in at least two directions by the adjustment assembly to dock the blade with the hub, the method further comprises:
controlling the rotation driving member to drive the rotating ring to rotate relative to the stationary ring based on position information of the crane, in such a manner that the hub faces towards the crane.

21. The method according to claim 14, wherein
the wind turbine foundation is disposed at sea; and
the connecting the nacelle, the hub, the plurality of blades, and another one of the plurality of tower sections that is different from the one and the next one of the plurality of tower sections, to one of the plurality of tower sections that is provided on the wind turbine foundation comprise:
providing an assembly tooling and a floating crane vessel provided with a crane, and connecting the assembly tooling to the one of the plurality of tower sections that is provided on the wind turbine foundation, wherein the assembly tooling comprises an auxiliary docking member comprising an adjustment assembly and a clamping assembly connected to the adjustment assembly;
lifting the another one of the plurality of tower sections above the wind turbine foundation by the crane, and interlocking the guiding structure of the another one of the plurality of tower sections with the locking structure of an uppermost tower section of the plurality of tower sections that is fixed to the wind turbine foundation or interlocking the locking structure of the another one of the plurality of tower sections with the guiding structure of the uppermost tower section of the plurality of tower sections that is fixed to the wind turbine foundation;
fixing, by fasteners, one of the end flanges of the another one of the plurality of tower sections to one of the end flanges of the uppermost tower section of the plurality of tower sections that is fixed to the wind turbine foundation;
sequentially lifting the nacelle and the hub by the crane to connect the nacelle and the hub to one of the plurality of tower sections above the wind turbine foundation; and
supporting each of the plurality of blades by the clamping assembly, and adjusting a position of the clamping assembly relative to the one of the plurality of tower sections that is provided on the wind turbine foundation by the adjustment assembly to dock the blade with the hub, so that the another of the plurality of tower sections connected to the nacelle, the nacelle, the hub, and the plurality of blades are assembled into a spinner assembly.

22. The method according to claim 21, wherein
a number n of the plurality of tower sections satisfies: n≥4; and
before the connecting the nacelle, the hub, the plurality of blades, and the another one of the plurality of tower sections that is different from the one and the next one of the plurality of tower sections, to one of the plurality of tower sections that is provided on the wind turbine foundation, the method further comprises:
repeating the lifting a next one of the plurality of tower sections above the one of the plurality of tower sections that is connected to the wind turbine foundation, and interlocking the guiding structure of one of the one and the next one of the plurality of tower sections with the locking structure of the other one of the one and the next one of the plurality of tower sections, and the fixing, by fasteners, the one of the plurality of tower sections and the next one of the plurality of tower sections that are adjacent to and interlocked with each other until the (n-1)-th tower section of the plurality of tower sections is installed above the wind turbine foundation.

23. The method according to claim 18 or 21, wherein
the hub is provided with a sensor, and the clamping assembly is provided with a first transmitter; and
the supporting each of the plurality of blades by the clamping assembly and adjusting the position of the clamping assembly relative to the support member or a position of the clamping assembly relative to the one of the plurality of tower sections that is provided on the wind turbine foundation, by the adjustment assembly to dock the blade with the hub comprises:
pre-adjusting the position of the clamping assembly relative to the support member by the adjustment assembly in such a manner that the first transmitter is in centering alignment with the sensor,
lifting one of the plurality of blades by the crane to the clamping assembly to clamp and fix the one of the plurality of blades by the clamping assembly,
controlling the adjustment assembly to adjust the clamping assembly to drive the one of the plurality of blades to move and then to be docked with the hub,
controlling the clamping assembly to release the one of the plurality of blades after the one of the plurality of blades is docked with the hub,
controlling the hub to rotate to an installation position, facing towards the auxiliary docking member, of a next one of the plurality of blades, and
repeating the steps after the pre-adjusting the position of the clamping assembly relative to the support member by the adjustment assembly in such a manner that the first transmitter is in centering alignment with the sensor until all of the plurality of blades are docked with the hub.

24. The method according to claim 23, wherein
the adjustment assembly comprises a base plate, a lifting unit configured to telescope in the first direction, and an adjustment member connected to the lifting unit and configured to drive the lifting unit to move in a plane intersecting with the first direction, the adjustment member being connected to the base plate, the clamping assembly being connected to the lifting unit; and
the pre-adjusting the position of the clamping assembly by the adjustment assembly in such a manner that the first transmitter is in centering alignment with the sensor comprises:
acquiring a vertical distance between the first transmitter and the base plate in the first direction,
in response to an absolute value of a first difference between the vertical distance and a first threshold being greater than zero, controlling the lifting unit to extend or retract in the first direction to drive the adjustment assembly to move until the absolute value of the first difference equals to zero, and
controlling the adjustment assembly to drive the lifting unit and the clamping assembly to move in a third direction until the first transmitter is in centering alignment with the sensor in the second direction, the first direction, the second direction, and the third direction intersecting.

25. The method according to claim 24, wherein
each of the plurality of blades is provided with a second transmitter; and
the controlling the adjustment assembly to adjust the clamping assembly to drive the one of the plurality of blades to move and then to be docked with the hub comprises:
controlling the lifting unit to lift or lower until the second transmitter is in centering alignment with the sensor, and
controlling the adjustment member to drive the lifting unit to move in the second direction in such a manner that the one of the plurality of blades is docked with the hub.

26. The method according to claim 25, before the controlling the adjustment member to drive the lifting unit to move in the second direction in such a manner that the one of the plurality of blades is docked with the hub, the method further comprising:
acquiring a heave amplitude of the one of the plurality of blades in the first direction and a heave amplitude of the hub in the first direction; and
in response to an absolute value of a second difference between the heave amplitude of the one of the plurality of blades and the heave amplitude of the hub being greater than zero, controlling the lifting unit to extend or retract to drive the clamping assembly to move until a displacement of the clamping assembly in the first direction equals to the absolute value of the second difference, and then controlling the lifting unit to stop extending or retracting.

27. The method according to any one of claims 14 to 26, further comprising:
in response to the one of the plurality of blades being damaged, removing the fasteners connecting the one of the end flanges of the another one of plurality of tower sections of the spinner assembly and the one of the end flanges of an uppermost tower section of the plurality of tower sections that is fixed to the wind turbine foundation; and
controlling the guiding structure of the another one of plurality of tower sections of the spinner assembly and the locking structure of the uppermost tower section of the plurality of tower sections that is fixed to the wind turbine foundation to be in an unlocked state or controlling the locking structure of the another one of plurality of tower sections of the spinner assembly and the guiding structure of the one of the plurality of tower sections that is fixed at top of the wind turbine foundation to be in an unlocked state, and lifting the spinner assembly to remove the spinner assembly as a whole onto the assembly tooling of a floating crane vessel for blade replacement.
